(19) Europäisches Patentamt European Patent Office Office européen des brevets

(11) **EP 3 825 627 A1**

(12) **DEMANDE DE BREVET EUROPEEN**

(43) Date de publication:
**26.05.2021 Bulletin 2021/21**

(51) Int Cl.:
*F25B 17/08* (2006.01)　　　　*F25B 29/00* (2006.01)

(21) Numéro de dépôt: **19306516.6**

(22) Date de dépôt: **22.11.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
**KH MA MD TN**

(71) Demandeur: **Elektron Gri**
**75005 Paris (FR)**

(72) Inventeurs:
• **CUI, Frédéric**
**75005 PARIS (FR)**
• **SERRE, Christian**
**75005 PARIS (FR)**
• **NOUAR, Farid**
**75005 PARIS (FR)**

(74) Mandataire: **Plasseraud IP**
**66, rue de la Chaussée d'Antin**
**75440 Paris Cedex 09 (FR)**

(54) **SYSTEME DE REFROIDISSEMENT/CHAUFFAGE PAR ADSORPTION/DESORPTION EN CASCADE**

(57)　　La présente invention concerne un dispositif de refroidissement/chauffage par adsorption/désorption en cascade comprenant :

- au moins deux modules d'adsorption/désorption (500, 600) d'un fluide réfrigérant, chaque module mettant en œuvre un fluide réfrigérant (F1, F2) et un matériau métallo-organique hybride poreux (MOF1, MOF2), lesdits MOF1 et MOF2 étant chacun en connexion thermique avec un circuit d'adsorption (512, 612) et avec un circuit de désorption (513, 613) tels que :

- le premier MOF1 présente une isotherme d'adsorption de type II, IV ou V selon la classification IUPAC caractérisée par une valeur de pression de vapeur partielle d'adsorption P80% (correspondant à la valeur de pression de vapeur partielle à laquelle la quantité de fluide réfrigérant F1 adsorbée par le MOF1 représente 80% de la quantité maximale d'adsorption dudit MOF1) comprise entre 5 et 60 %, de préférence entre 15 et 50 %, ladite isotherme d'adsorption étant obtenue à une température correspondant à la température d'adsorption du circuit d'adsorption (512), et

- le second MOF2 présente une isotherme d'adsorption de type II, IV ou V selon la classification IUPAC caractérisée par une valeur de pression de vapeur partielle d'adsorption P80% (correspondant à la valeur de pression de vapeur partielle à laquelle la quantité de fluide réfrigérant F2 adsorbée par le MOF2 représente 80% de la quantité maximale d'adsorption dudit MOF2) comprise entre 5 et 40 % de pression relative du fluide réfrigérant, de préférence entre 10 et 30 %, ladite isotherme d'adsorption étant obtenue à une température correspondant à la température d'adsorption du circuit d'adsorption (612).

Figure 2

**Description**

**Domaine technique**

La présente invention se rapporte à un procédé et un dispositif de refroidissement/chauffage par adsorption/désorption en cascade.

**Technique antérieure**

Le chauffage et la climatisation, par exemple des habitations, des entreprises, des entrepôts et/ou des centres de données, représentent une part importante de la consommation énergétique mondiale. Les systèmes usuellement utilisés sont cependant très énergivores. De plus, les fluides réfrigérants tels que les chlorofluorocarbures, le bromure de méthyle ou encore le tétrachlorure de carbone utilisés dans ces systèmes de chauffage/refroidissement sont nocifs pour l'environnement.

Dans un contexte de crise environnementale et dans un souci de réduire la consommation énergétique mondiale et l'utilisation de produit dangereux pour l'environnement, il est essentiel de réfléchir à de nouveaux moyens de produire du chaud et/ou du froid.

Les systèmes de refroidissement/chauffage fonctionnant par adsorption/désorption ont par exemple été développés pour répondre à ces problématiques. De tels systèmes présentent en effet une consommation énergétique contrôlée et les fluides réfrigérants utilisés (par exemple l'eau) sont inoffensifs pour l'environnement.

Un système classique de refroidissement/chauffage par adsorption/désorption comprend par exemple, un module d'évaporation, un module de condensation et un ou plusieurs matériaux adsorbants/désorbants échangeurs de chaleur. Le fluide réfrigérant passe d'une phase liquide à une phase gazeuse dans le module d'évaporation, puis de la phase gazeuse à la phase liquide dans le module de condensation. De façon générale, le froid est généré au niveau du module d'évaporation tandis que le chaud est généré au niveau du module de condensation. Les matériaux adsorbants/désorbants jouent en quelque sorte le rôle de compresseur chimique. Ils stockent et restituent la chaleur transportée par le fluide réfrigérant successivement adsorbé et désorbé.

L'étape d'adsorption peut être opérée à température ambiante. L'étape de désorption nécessite quant à elle une source extérieure de chaleur afin de chauffer le matériau poreux jusqu'à ce qu'il désorbe, c'est-à-dire relâche sous forme de vapeur, la quantité de fluide réfrigérant qu'il avait préalablement adsorbé.

Les sources de chaleur externe nécessaires à l'étape de désorption proviennent avantageusement de sources non polluantes issues d'énergie renouvelable telles que des circuits de chaleur perdue dans des locaux industriels, des entreprises et/ou des centres de données, de panneaux solaires, ou de circuits d'eau chaude des villes.

L'efficacité du procédé est déterminée par la quantité de vapeur du fluide réfrigérant qui peut être réversiblement échangée entre l'adsorption et la désorption (définit le COP) et par le temps d'adsorption (définit le SCP).

Le coefficient de performance ou COP est défini selon l'équation Math. 1 suivante.

[Math. 1]

$$COP = \frac{Q_{\text{Evaporation}}}{Q_{Désorption}}$$

Le COP est sans unité.

$Q_{\text{Evaporation}}$ est le froid produit au niveau du module d'évaporation, il correspond à une énergie et s'exprime en Joules. $Q_{\text{Desorption}}$ est la chaleur nécessaire à la désorption, il correspond à une énergie et s'exprime en Joules.

La puissance de refroidissement spécifique SCP par volume ou poids du dispositif correspond à la quantité de fluide réfrigérant échangée lors de l'étape d'adsorption par rapport au volume ou à la masse des matériaux adorbants mis en jeu dans le système.

La formule mesurant la puissance de refroidissement SCP retenue dans la présente demande prend en compte la masse du matériau poreux séché mis en jeu. Un matériau poreux séché signifie qu'il n'a encore adsorbé aucune particule de fluide réfrigérant. La SCP est définie selon l'équation Math. 2 suivante.

## [Math. 2]

$$\mathrm{SCP} = \frac{1}{m} \cdot \frac{Q_{Evaporation}}{t}$$

La SCP s'exprime en watt par masse de matériau poreux séché (W/kg). m est la masse du matériau poreux séché.

$Q_{Evaporation}$ est le froid produit au niveau du module d'évaporation, il correspond à une énergie et s'exprime en Joules. t est le temps d'adsorption ou de désorption exprimé en secondes.

Différents types de matériaux adsorbants peuvent être utilisés dans le système de chauffage/refroidissement par adsorption/désorption, par exemple le zéolite, le charbon actif ou le silicate $SiO_2$. D'autres adsorbants présentant des meilleurs propriétés d'intérêts sont les matériaux métallo-organique hybride poreux ou « MOFs », pour « Metal-Organic Framework » en anglais.

Un système de refroidissement/chauffage mettant en œuvre des adsorbants à base de MOFs est par exemple décrit par exemple dans le brevet FR 3 026 163. Le système proposé est avantageux sur le plan énergétique, et met en œuvre de l'eau comme fluide réfrigérant. Toutefois, le système proposé n'est pas un système en cascade. Le coefficient de performance obtenu avec un tel système reste faible, de sorte que les performances de refroidissement/chauffage ne sont pas optimales.

Pour améliorer l'efficacité des systèmes de refroidissement/chauffage fonctionnant par adsorption, il a été imaginé de mettre deux systèmes d'adsorption/désorption en cascade. Ainsi, la chaleur générée par la condensation du fluide obtenue par désorption d'un premier adsorbant est utilisée pour faire désorber un second adsorbant. Ainsi, la masse de réfrigérant échangée lors d'un cycle adsorption/désorption et l'efficacité des échanges thermique sont augmentés.

Le fonctionnement des systèmes de refroidissement/chauffage par adsorption/désorption en cascade a été expliqué par N. Douss et F. Meunier dans la publication « Experimental study of cascading adsorption cycles », 30 Juin 1988. Les chercheurs mettaient en œuvre deux couples adsorbants/fluide réfrigérant différents : zéolite/eau et charbon actif/méthanol.

Cependant, les températures d'utilisation de ce système sont trop élevées et ne permettent donc pas de fonctionner à partir d'une source de chaleur externe issue d'énergie propre. Ce document ne décrit pas non plus l'utilisation avantageuse de MOF.

Le brevet FR 2 590 356 décrit aussi un système de refroidissement/chauffage fonctionnant par adsorption/désorption en cascade à partir d'un couple zéolithe-eau et charbon actif-eau. Cependant, de même que pour le document précédent, la température maximale de régénération est trop élevée et ne permet pas au système de fonctionner à partir d'une source de chaleur externe issue d'énergie propre.

### Problème technique

Il serait donc souhaitable de développer un système de chauffage/refroidissement répondant aux enjeux environnementaux actuels, dont la consommation énergétique est réduite, et l'efficacité énergétique aussi importante que les dispositifs de chauffage/climatisation les plus énergivores, pouvant être mis en œuvre à partir de sources de chaleur issues d'énergies propres avec des fluides réfrigérants inoffensifs pour l'environnement.

En particulier, les inventeurs ont découvert un système présentant une consommation énergétique faible, un COP et une SCP optimaux, et mettant en œuvre un fluide réfrigérant inoffensif pour l'environnement. Le COP atteint par le dispositif de la présente invention est supérieur à 1 et proche de 2. Un tel COP était difficilement atteignable pour une machine de chauffage/refroidissement par adsorption/désorption et notamment pour une machine à froid. En outre, les inventeurs ont découvert un système qui permet avantageusement d'utiliser de la chaleur issue d'énergie propre.

Les inventeurs ont découvert de façon surprenante que c'est l'association de deux matériaux adsorbants, à base de MOFs, qui présentent des caractéristiques spécifiques d'adsorption et de désorption en fonction de la température et de la pression partielle du fluide réfrigérant qui permet de répondre aux présentes problématiques.

### Résumé de l'invention

L'invention a ainsi pour premier objet un dispositif de refroidissement/chauffage par adsorption/désorption en cascade comprenant :

- au moins deux modules d'adsorption/désorption d'un fluide réfrigérant, chaque module mettant en œuvre un fluide réfrigérant et un matériau métallo-organique hybride poreux (MOF), lesdits matériaux métallo-organique hybride poreux étant chacun en connexion thermique avec un circuit d'adsorption et avec un circuit de désorption tels que :
- le premier MOF présente une isotherme d'adsorption de type II, IV ou V selon la classification IUPAC caractérisée par une valeur de pression de vapeur partielle d'adsorption $P_{80\%}$ (correspondant à la valeur de pression de vapeur partielle à laquelle la quantité de fluide réfrigérant F1 adsorbée par le premier MOF représente 80% de la quantité maximale d'adsorption dudit premier MOF) comprise entre 5 et 60 %, de préférence entre 15 et 50 %, ladite isotherme d'adsorption étant obtenue à une température correspondant à la température d'adsorption du circuit d'adsorption, et
- le deuxième MOF présente une isotherme d'adsorption de type II, IV ou V selon la classification IUPAC caractérisée par une valeur de pression de vapeur partielle d'adsorption $P_{80\%}$ (correspondant à la valeur de pression de vapeur partielle à laquelle la quantité de fluide réfrigérant F2 adsorbée par le deuxième MOF représente 80% de la quantité maximale d'adsorption dudit deuxième MOF) comprise entre 5 et 40 % de pression relative du fluide réfrigérant, de préférence entre 10 et 30 %, ladite isotherme d'adsorption étant obtenue à une température correspondant à la température d'adsorption du circuit d'adsorption.

L'invention a pour deuxième objet un procédé de refroidissement/chauffage par adsorption/désorption en cascade mettant en œuvre un dispositif tel que décrit précédemment, comprenant les étapes suivantes:

a) une étape de refroidissement par adsorption dans laquelle,

un premier module d'adsorption/désorption (500) mettant en œuvre un premier matériau métallo-organique hybride poreux MOF1 est en connexion fluide avec un premier module d'évaporation (10) comprenant un premier fluide réfrigérant F1 en connexion thermique avec un premier circuit de froid (11), ledit MOF1 étant en connexion thermique avec un premier circuit d'adsorption (512) et étant apte à adsorber ledit fluide réfrigérant F1 à une température d'adsorption $T_{ads}$ comprise entre 10 et 70 °C, de préférence entre 20 à 60 °C ;

un second module d'adsorption/désorption (600) mettant en œuvre un second matériau métallo-organique hybride poreux MOF2 est en connexion fluide avec un second module d'évaporation (20), comprenant un second fluide réfrigérant F2 en connexion thermique avec un second circuit de froid (21), ledit MOF2 étant en connexion thermique avec un second circuit d'adsorption (612) et étant apte à adsorber ledit fluide réfrigérant F2 à une température $T_{ads}$ identique à celle du MOF1 comprise entre 10 et 70 °C, de préférence entre 20 à 60 °C ;

ladite étape d'adsorption étant caractérisée en ce que :

- le premier circuit d'adsorption (512) est opéré à une température $T_{ads1} \geq T_{ads}$ de manière à ce que le MOF1 atteigne une température supérieure ou égale à $T_{ads}$ et adsorbe le fluide F1, et
- le premier module d'évaporation (10) est opéré à pression réduite de manière à ce que le fluide F1 atteigne une valeur de pression de vapeur partielle d'adsorption $P_{ev1}$ à laquelle la masse de fluide réfrigérant F1 adsorbée par le MOF1 représente au moins 20% de la masse du MOF1 séché, de sorte que la température de sortie du premier circuit de froid (11) ($T_{ev1}$) est comprise entre 5 °C et la température ambiante; et
- le second circuit d'adsorption (612) est opéré à une température $T_{ads2} \geq T_{ads}$ de manière à ce que le MOF2 atteigne une température supérieure ou égale à $T_{ads}$ et adsorbe le fluide F2, et
- le second module d'évaporation (20) est opéré à pression réduite de manière à ce que le fluide F2 atteigne une valeur de pression de vapeur partielle d'adsorption $P_{ev2}$ à laquelle la masse de fluide réfrigérant F2 adsorbée par le MOF2 représente au moins 20% de la masse du MOF2 séché, de sorte que la température de sortie du second circuit de froid (21) ($T_{ev2}$) est comprise entre 5 °C et la température ambiante ; et

b) une étape de chauffage par désorption dans laquelle,

le premier module d'adsorption/désorption (500) mettant en œuvre le premier matériau métallo-organique hybride poreux MOF1 est en connexion fluide avec un premier module de condensation (30) comprenant le premier fluide réfrigérant F1 en connexion thermique avec un premier circuit de chaud (31), ledit MOF1 étant en connexion thermique avec un premier circuit de désorption (513) et étant apte à désorber ledit fluide réfrigérant F1 à une température de désorption $T_{des1}$ comprise entre 50 et 95 °C, de préférence entre 55 à 70 °C,

le second module d'adsorption/désorption (600) mettant en œuvre le second matériau métallo-organique hybride poreux MOF2 est en connexion fluide avec un second module de condensation (40) comprenant le second fluide réfrigérant F2 en connexion thermique avec un second circuit de chaud (41), ledit MOF2 étant en connexion thermique avec un second circuit de désorption (613) et étant apte à désorber ledit fluide réfrigérant F2 à une température de désorption $T_{des2}$ comprise entre 55 et 125 °C, de préférence entre 70 °C et 115 °C,

ladite étape de désorption étant caractérisée en ce que :

- le premier circuit de désorption (513) est opéré à une température $T_{des} \geq T_{des1}$ de manière à ce que le MOF1 atteigne une température supérieure ou égale à $T_{des1}$ et désorbe le fluide F1, et
- le premier module de condensation (30) est opéré à pression réduite de manière à ce que le fluide F1 atteigne une valeur de pression de vapeur partielle de l'adsorption $P_{cond1}$ à laquelle la masse de fluide réfrigérant F1 désorbée par le premier MOF1 représente au moins 20% de la masse du matériau MOF1 séché, de sorte que la température de sortie du premier circuit de chaud 30 ($T_{cond1}$) est comprise entre la température ambiante et 70 °C ; et
- le second circuit de désorption (613) est opéré à une température $T_{des} \geq T_{des2}$ de manière à ce que le MOF2 atteigne une température supérieure ou égale à $T_{des2}$ et désorbe le fluide F2, et
- le second module de condensation (40) est opéré à pression réduite de manière à ce que le fluide F2 atteigne une valeur de pression de vapeur partielle de l'adsorption $P_{cond2}$ à laquelle la masse de fluide réfrigérant F2 désorbée par le second MOF2 représente au moins 20% de la masse du matériau MOF2 séché, de sorte que la température de sortie du second circuit de chaud (41) ($T_{cond2}$) est comprise entre la température ambiante et 95 °C, de préférence entre 55 °C et 70 °C ; et

ladite étape de désorption étant caractérisée en ce que le second circuit de chaud (41) est relié thermiquement au premier circuit de désorption (513) de manière à ce que la température de sortie du second circuit de chaud (41) ($T_{cond2}$) - qui est supérieure ou égale à $T_{des1}$ - permette au premier MOF1 d'atteindre une température supérieure ou égale à $T_{des1}$ et de désorber le fluide F1.

L'invention a pour objet selon un troisième aspect un dispositif de climatisation à ventilo-convecteur mettant en œuvre un dispositif selon le premier objet de l'invention.

L'invention a pour objet selon un quatrième aspect un dispositif de climatisation à plancher ou plafond rafraîchissant mettant en œuvre un dispositif selon le premier objet de l'invention.

L'invention a pour objet selon un cinquième aspect l'utilisation d'un dispositif selon le premier objet de l'invention pour le refroidissement ou le chauffage dans un dispositif de climatisation à ventilo convecteur, ou à plancher ou plafond rafraîchissant.

L'invention permet ainsi le chauffage et/ou refroidissement aussi bien de petites pièces telles qu'une chambre, un salon ou une maison. La présente invention peut aussi être mise en œuvre pour le chauffage/refroidissement d'un grand ensemble tel un système de chauffage/refroidissement centralisé d'un immeuble.

**Exposé de l'invention**

**Le dispositif**

Pour une meilleure compréhension du présent exposé, plusieurs termes sont explicités ci-après.

Afin de faciliter la lecture de la suite du présent exposé, le terme « matériau poreux » pourra être utilisé pour décrire un « matériau métallo-organique hybride poreux », les deux termes ayant dans la présente demande la même signification, c'est-à-dire celle d'un matériau métallo-organique hybride poreux.

Au sens de la présente demande, le terme « module » se rapporte à un système de préférence fermé qui peut contenir par exemple un fluide réfrigérant à l'état solide et/ou liquide et plusieurs réseaux de circuits échangeurs de chaleur et/ou un matériau poreux. La pression à l'intérieur du module peut de préférence être modifiée. A titre d'exemple, le module d'évaporation peut être un système fermé, par exemple sous la forme d'un cylindre métallique, pouvant être opéré sous vide, étant parcouru par un circuit de froid et contenant un fluide réfrigérant. Le module d'évaporation peut en outre contenir une ouverture et une fermeture pouvant être opérées à souhait de l'utilisateur, par exemple sous forme de valves communiquant avec des modules différents.

Au sens de la présente demande, le terme « en connexion fluide » se réfère à un moyen de connexion permettant le transfert de fluide réfrigérant en phase liquide ou gazeuse, entre les différents éléments auxquels il se rapporte. Il peut par exemple s'agir d'un moyen de connexion assurant le transfert de vapeur de fluide réfrigérant entre le module d'évaporation et le module d'adsorption/désorption ou le transfert de vapeur condensée entre le module de condensation et le module d'évaporation.

Les connexions fluides peuvent avantageusement être contrôlées par une valve qui peut être soit en position ouverte, soit en position fermée. Deux modules sont dits en connexion fluide lorsque la valve est en position ouverte.

Au sens de la présente demande, le terme « en connexion thermique » se réfère à un moyen de connexion permettant l'échange de chaleur entre les éléments auxquels il se rapporte. Il peut par exemple s'agir d'un moyen de connexion permettant l'échange de chaleur entre un module de condensation et un circuit de chaud ou bien entre un module d'évaporation et un circuit de froid, ou bien entre le matériau poreux et un circuit d'adsorption ou un circuit de désorption.

La connexion thermique est réalisée de préférence avec un échangeur thermique. La connexion thermique est avantageusement réalisée par passage d'un circuit d'eau échangeur de chaleur. Un échangeur thermique est de préférence un échangeur de type tube/ailettes.

Dans le présent exposé, il est entendu par « isotherme d'adsorption » ou simplement « isotherme » une courbe mesurée à une température donnée, montrant l'évolution du rapport (en %) de la masse de liquide réfrigérant adsorbée par un matériau poreux sur la masse totale dudit matériau poreux séché en fonction de la valeur de pression de vapeur partielle du fluide réfrigérant.

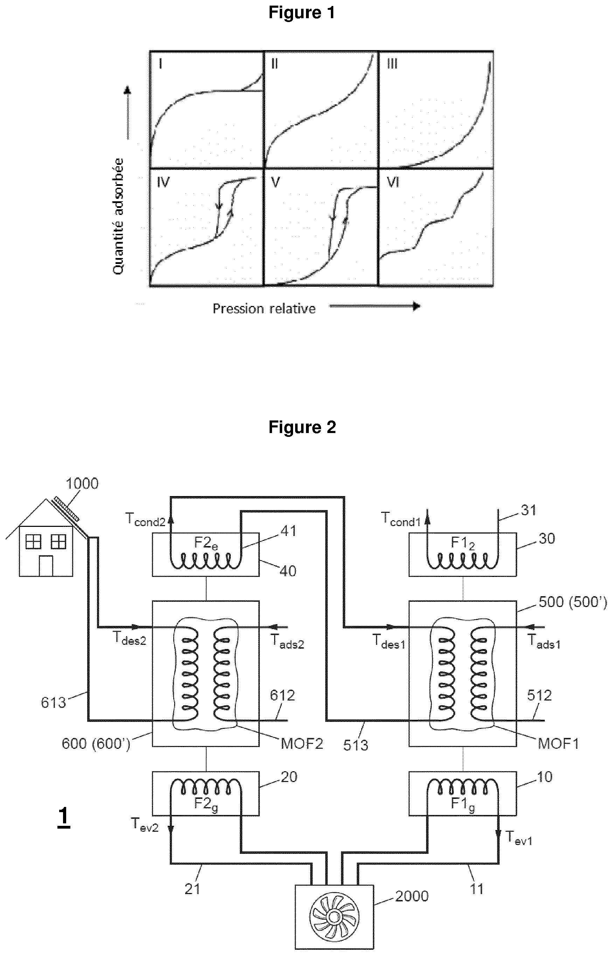

Les isothermes d'adsorption présentent des formes caractéristiques qui ont permis la classification des matériaux adsorbant poreux en fonction de la forme de leur isotherme. Un groupe de travail de l'IUPAC a ainsi défini 9 types d'isothermes d'adsorption particulières. La figure 1 du présent exposé illustre ces neufs types de courbes et leur classification.

A une température donnée, cette courbe atteint un maximum qui définit la quantité maximal de fluide réfrigérant que le matériau poreux peut adsorber. En principe, la quantité maximale de fluide réfrigérant que le matériau poreux peut adsorber est mesurée quand la pression à laquelle le fluide réfrigérant est soumis est proche de la pression saturante à la température de mesure, c'est-à-dire une valeur de pression de vapeur partielle proche de 100%.

Ainsi, l'homme du métier est en mesure de définir, choisir et/ou identifier un matériau poreux, par exemple un MOF, à partir de la classification IUPAC dudit matériau poreux et d'un point caractéristique de l'isotherme d'adsorption dudit matériau poreux.

Il n'est pas exclu de la présente invention que les deux MOFs choisis soient les mêmes. Par exemple, dans le cas où le MOF1 et le MOF2 sont de type II ou V selon la classification IUPAC, les MOF1 et MOF2 présentant tous deux une valeur de pression de vapeur partielle $P_{80\%}$ qui se recoupe, c'est-à-dire une valeur de pression de vapeur partielle comprise entre 5 et 40% et de préférence 15 et 30%.

Les deux matériaux poreux mis en œuvre dans la présente invention sont de préférence deux matériaux métallo-organiques hybrides poreux différents.

Il existe une grande variété de matériaux métallo-organiques hybrides. La présente invention permet avantageusement d'optimiser la combinaison de deux MOFs, de préférence différents, mis en œuvre en cascade dans un système de chauffage/refroidissement selon l'invention.

Au sens de la présente demande, il est entendu par « valeur de pression de vapeur partielle » d'un fluide réfrigérant la pression à laquelle ledit fluide est soumis par rapport à la pression saturante dudit fluide considéré pour une température donnée. La valeur de pression de vapeur partielle est donc un rapport entre deux pressions et s'exprime de préférence en pourcentage (%) ou en rapport/ratio compris entre 0 et 1.

La pression saturante est la pression à laquelle la phase gazeuse d'une substance est en équilibre avec sa phase liquide, pour une température donnée dans un système fermé.

Dans le cas où le fluide réfrigérant est l'eau, la pression de vapeur partielle correspond à la notion d'humidité relative.

Les fluides réfrigérant adsorbés par l'un ou l'autre des deux matériaux poreux peuvent être choisi différents ou identique.

Le choix du fluide réfrigérant à utiliser peut être guidé par exemple par les températures d'évaporation, de condensation, d'adsorption et/ou de désorption de chacun des deux modules d'adsorption/désorption indépendamment l'un de l'autre.

Les fluides réfrigérants mis en œuvre dans la présente invention peuvent être choisis parmi l'eau, les alcools, l'ammoniac ou leurs mélanges, et de préférence l'eau.

De tels fluides réfrigérant ont l'avantage d'être abondants dans le commerce. Ils sont peu onéreux et inoffensifs pour la nature. Leur recyclage et réutilisation est en outre possible, à l'inverse des fluides réfrigérants polluants et chers utilisés dans certains arts antérieurs.

Les températures d'adsorptions, c'est-à-dire les températures auxquelles les deux matériaux poreux sont soumis lorsqu'ils adsorbent le fluide réfrigérant correspondant sont les températures $T_{ads1}$ et $T_{ads2}$ des deux circuits d'adsorption.

Les températures d'adsorption sont les températures normales d'utilisation du dispositif. Les températures des deux circuits d'adsorption peuvent être identiques ou différentes.

Dans le cas où les températures d'adsorption sont identiques, la température d'adsorption $T_{ads}$ à laquelle les matériaux poreux adsorbent peut être la température extérieure à laquelle le dispositif est soumis. Par exemple une température proche d'au moins 30 °C en été en région tempérée ou proche de 15°C au printemps en région tempérée.

Les circuits d'adsorption peuvent ainsi être de simples échangeurs thermiques communiquant avec l'extérieur de sorte que $T_{ads1}$ et $T_{ads2}$ soient à la température ambiante. Les deux circuits d'adsorption sont en outre en connexion thermique avec leur MOF respectif au sein de leur module d'adsorption respectif de sorte que $T_{ads1}$ est supérieur ou égale à la température $T_{ads}$ du MOF1 et $T_{ads2}$ est supérieur ou égale à la même température d'adsorption $T_{ads}$ du MOF2 pour que chaque MOF adsorbe. L'air libre est bien entendu l'air dans lequel sont les circuits d'adsorption, dans une pièce, à l'extérieur, dans un entrepôt etc....

Les circuits d'adsorptions peuvent aussi être des circuits d'adsorption reliés à un système de refroidissement/chauffage autre que celui de la présente invention de sorte que l'utilisateur peut choisir et modifier selon sa volonté la température d'adsorption des circuits d'adsorption.

Ainsi, la température d'adsorption à laquelle les matériaux adsorbants de la présente invention sont soumis lorsqu'ils adsorbent ($T_{ads1}$ et $T_{ads2}$) des circuits d'adsorption peut être comprise entre 10 et 70 °C, et de préférence 20 et 60 °C.

De telles températures d'adsorption ont l'avantage d'être facilement obtenues soit en mettant les circuits d'adsorption à l'air libre soit en reliant les circuits d'adsorption a un système externe de chauffage/refroidissement peu énergivore au vue de la gamme de température souhaitée.

Ainsi, les MOFS de la présente invention peuvent être des complexes Métal-Ligand organique M-L' dans lesquels ;

A) le métal « M » est choisi parmi le fer, l'aluminium, le chrome, le zirconium , le titane ou les terres rares

B) le ligand organique « L' » est un ligand carboxylate de formule R1-(C(=O)-R3)q dans laquelle
q représente un entier de 2 à 6; de préférence 2, 3 ou 4;
chaque occurrence de R3 est indépendamment sélectionnée parmi un atome d'halogène, -OH, -OY où Y représente un cation de métal alcalin, -OR4, -OC(=O)R4, ou NR4R4', où R4 et R4', identiques ou différents, représentent des radicaux alkyles en C1-12
R1 représente indépendamment:

un radical alkyle en C1 -C12, alcényle en C2 -C12 ou alcynyle en C2 -C12;
un radical aryle monocyclique ou polycyclique, condensé ou non, comprenant 6 à 50 atomes de carbone;
un hétéroaryle monocyclique ou polycyclique, condensé ou non, comprenant 3 à 50 atomes de carbone avec un ou plusieurs atomes d'oxygène, d'azote ou/et de soufre;
R1 portant éventuellement un ou plusieurs substituants choisis indépendamment parmi un atome d'halogène, -OH, -COOH, -SO$_3$H, -NH$_2$, -NO$_2$, ou alkyle en C1-6, un radical aryle monocyclique ou polycyclique, ou un radical hétéroaryle monocyclique ou polycyclique avec un ou plusieurs atomes d'oxygène, d'azote ou/et de soufre.

Le ligand organique L' provient de préférence d'un acide di, tri ou tétracarboxylique, choisi parmi acide fumarique, acide succinique, acide glutarique, acide muconique, acide adipique, acide azélaïque, acide 2,5-thiophènedicarboxylique, acide 2,5-furanedicarboxylique, acide isopthalique, acide téréphtalique, acide 1-H pyrazole-3,5 dicarboxylique, acide 2,5-pyrazine-dicarboxylique, acide naphtalène-2,6-dicarboxylique, acide biphényl-4,4'-dicarboxylique, acide azobenzènedicarboxylique, acide benzène-1,2,4-tricarboxylique, acide benzène-1,3,5-tricarboxylique, acide benzène-1,3,5-tribenzoïque, acide benzène-1,2,4,5-tétracarboxylique, acide naphtalène-2,3,6,7-tétracarboxylique, acide naphtalène-1,4,5,8-tétracarboxylique, acide biphényl-3, 5, 3', 5'-tétracarboxylique ou acide azobenzènetétracarboxylique; Ou des analogues modifiés choisis parmi l'acide 2-aminotéréphtalique, l'acide 2-nitrotéréphtalique, l'acide 2-méthyltéréphtalique, l'acide 2-chlorotéréphtalique, l'acide 2-bromotéréphtalique, l'acide 2,5-dihydroxotéréphtalique, l'acide tétrafluorotéréphtalique, l'acide 2,5-diméthyltéréphtalique, l'acide tétraméthyltéréphtalique, l'acide diméthyl-4,4'-biphénydicarboxylique, l'acide tétraméthyl-4,4'-biphénydicarboxylique, l'acide dicarboxy-4,4'-biphénydicarboxylique ou l'acide 2,5-pyrazyne dicarboxylique; ou des dérivés de ligands choisis parmi l'acide isophtalique, l'acide 3,3-diperfluorotéréphtalique, l'acide azobenzène-4,4'-dicarboxylique, l'acide 3,3'-dichloro-azobenzène-4,4'-dicarboxylique, l'acide 3,3'-dihydroxo-azobenzène-4,4'-dicarboxylique, l'acide 3,3'-diperfluoroazobenzène-4,4'-dicarboxylique, l'acide 3,5,3', 5'-azobenzène tétracarboxylique, l'acide 2,5-diméthyltéréphtalique ou l'acide perfluoroglutarique.

De tels MOFs présentent en effet l'avantage d'être résilients dans le temps tout en présentant des propriétés d'adsorption tant en terme de rendement énergétique qu'en terme de température de fonctionnement compatibles avec des températures de fonctionnement satisfaisantes. Des températures de fonctionnement sont satisfaisantes si elles sont compatibles avec des sources externes de chaleur issues d'énergies propres et permettent un refroidissement et/ou un chauffage satisfaisant pour l'utilisateur.

Le ou les MOF1 ou MOF2 peuvent se présenter sous diverses formes. Il se présente sous forme solide et peut par exemple être utilisé en suspension ou sous forme de poudre. Les MOFs selon la présente invention peuvent éventuellement être sous forme de composites avec des particules carbonées, par exemple noir de carbone, graphite, oxyde de graphite, oxyde de graphène, particules inorganiques etc., afin de pallier le manque de conductivité électrique et thermique dans la nature des adsorbants poreux.

Le ou les MOF1 ou MOF2 peuvent aussi être sous forme de granulés, pastilles ou extrudats libres ou emballés dans un support conducteur.

De tels solides sont obtenus par exemple par des procédés connus de l'homme du métier de granulation par voie humide, pelletisation ou par extrusion.

Les solides sont de préférence sous forme sphérique dont la sphéricité peut éventuellement être améliorée en utilisant un sphéroniseur.

Les solides sous forme de billes, extrudats etc... peuvent être durcis dans un four au moins à 100 °C et de préférence 120 °C pendant au moins 6 heures et de préférence au moins 8 heures.

La taille des solides ainsi obtenus est contrôlée selon des procédés connus de l'homme du métier. Le diamètre moyen en nombre des particules ainsi obtenu peut être compris entre 0,1 et 5 mm, de préférence entre 0,5 à 0,9 mm.

La mise en forme du ou des MOF1 ou MOF2 peut aussi être avantageusement réalisée par ajout d'un liant inorganique ou un liant organique.

Le liant inorganique est par exemple la silice, une argile. Le liant organique est par exemple un polymère de type PVB, siloxane, des résines silicones.

Le ou les MOF1 ou MOF2 peuvent aussi être sous la forme d'un revêtement d'un support conducteur. Un tel revêtement est obtenu par exemple par un procédé connu de l'homme du métier de pulvérisation, de centrifugation ou trempage-tirage. Le support conducteur est de préférence conducteur électrique et thermique. En règle générale, un conducteur électrique est conducteur thermique. Par exemple, le support conducteur peut être un matériau métallique tel que l'aluminium.

Dans le cas où le matériau poreux constitue un revêtement d'un support conducteur, le support conducteur peut aussi être mis en forme de façon à améliorer l'adhésivité du matériau poreux sur le support. Par exemple, la surface du support, de préférence métallique, peut être fonctionnalisée mécaniquement pour modifier la rugosité du support. La surface du support peut aussi être fonctionnalisée par tout autre moyen, par exemple par rayon plasma, électronique ou chargée électriquement pour améliorer son adhésivité avec les matériaux poreux.

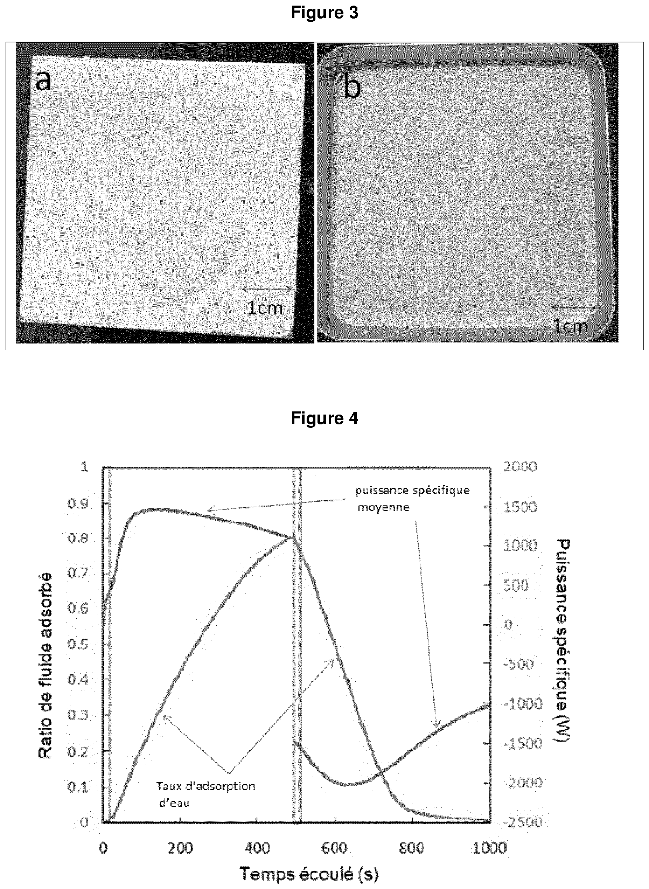

La figure 3 présente deux mises en forme différentes de MOF. La mise en forme a de la figure 3 est une photo d'un MOF sous la forme d'un revêtement d'une plaque de support conducteur. La mise en forme b de la figure 3 est la photo d'un MOF en forme de granulés compactés. Une échelle de longueur est ajoutée à la photo pour une meilleure compréhension.

Le premier matériau poreux du premier module d'adsorption/désorption peut être mis en forme de façon identique ou différente du deuxième matériau poreux du deuxième module d'adsorption/désorption.

Les matériaux poreux mis en œuvre dans le dispositif de la présente invention sont facilement mis en forme. Leur remplacement est aussi rendu facile. Par exemple, dans le cas où un matériau est mis sous forme d'un revêtement d'un support conducteur sous forme de plaque, il suffit de remplacer la plaque comprenant le matériau poreux.

Avantageusement, le dispositif est mis en œuvre de sorte que les deux modules d'adsorption/désorption soient alternativement mis en mode adsorption puis en mode désorption.

Les deux modules d'adsorption/désorption sont de préférence en mode adsorption en même temps ou en mode désorption en même temps. C'est-à-dire que lorsque le premier module d'adsorption est opéré de sorte que le matériau poreux adsorbe, le deuxième module d'adsorption est aussi opéré, selon des configurations qui lui sont propres, de sorte que le deuxième matériau poreux adsorbe.

Ainsi, de façon avantageuse, le dispositif selon l'invention peut être caractériser en ce que

- le premier module d'adsorption/désorption comprenant le MOF1 est alternativement en connexion fluide avec un premier module d'évaporation dans lequel le fluide réfrigérant F1 est relié thermiquement avec un premier circuit de froid et un premier module de condensation dans lequel le fluide réfrigérant F1 est relié thermiquement à un premier circuit de chaud,
  et
- un second module d'adsorption/désorption comprenant le MOF2 est alternativement en connexion fluide avec un second module d'évaporation dans lequel le fluide réfrigérant F2 est relié thermiquement avec un second circuit de froid et un second module de condensation dans lequel le fluide réfrigérant F2 est relié thermiquement à un second circuit de chaud.

Un tel dispositif permet de mettre en œuvre des couples matériau poreux/fluide réfrigérant différents et fonctionnant à des températures différentes. Ainsi, le premier module d'évaporation et le second module d'évaporation peuvent être opérés à des pressions différentes de sortes que deux niveaux de températures de froid peuvent être générés. De même, le premier module de condensation et le deuxième module de condensation peuvent être opérés à des pressions différentes de sorte que deux niveaux de températures de chaud peuvent être obtenus.

De même, le dispositif selon l'invention peut être mis en œuvre de sorte que les modes d'adsorption et de désorption soient réalisés en même temps. C'est-à-dire que le froid et le chaud sont générés de façon continue. Pour cela, les modules d'adsorption/désorption sont « doublés ».

Le dispositif selon la présente invention peut être caractérisé en ce que

- le premier module d'adsorption/désorption du premier fluide réfrigérant F1 est mis en série avec un troisième module d'adsorption/désorption dudit premier fluide réfrigérant F1, de sorte que lorsque le premier module d'adsorption/désorption est en connexion fluide avec le premier module d'évaporation, le troisième module d'adsorption/désorption du fluide réfrigérant F1 est en connexion fluide avec le premier module de condensation, et inversement, lorsque le premier module d'adsorption/désorption est en connexion fluide avec le premier module de condensation, le troisième module d'adsorption/désorption du fluide réfrigérant F1 est en connexion fluide avec le premier module d'évaporation,
et
- le second module d'adsorption/désorption 600 du second fluide réfrigérant F2 est mis en série avec un quatrième module d'adsorption/désorption dudit second fluide réfrigérant F2, de sorte que lorsque le second module d'adsorption/désorption est en connexion fluide avec le second module d'évaporation, le quatrième module d'adsorption/désorption du fluide réfrigérant F2 est en connexion fluide avec le second module de condensation, et inversement, lorsque le second module d'adsorption/désorption est en connexion fluide avec le second module de condensation, le quatrième module d'adsorption/désorption du fluide réfrigérant F2 est en connexion fluide avec le second module de d'évaporation.

Un tel dispositif présente donc l'avantage de générer de façon continue du froid et du chaud. Lorsque le premier module d'adsorption est opéré de sorte que le premier matériau poreux adsorbe, le troisième module d'adsorption est opéré de sorte que le matériau poreux du troisième module d'adsorption désorbe le fluide réfrigérant. Le premier et le troisième module d'adsorption/désorption comprennent deux matériaux poreux identiques. Du froid est continuellement généré au niveau du premier module d'évaporation qui est connecté alternativement au premier puis au troisième module d'adsorption/désorption lorsque ceux-ci sont opérés de sorte que les matériaux poreux qu'ils comprennent adsorbent. De même, du chaud est continuellement généré au niveau du module de condensation qui est connecté alternativement avec le premier et le troisième module d'adsorption/désorption lorsque ceux-ci sont opérés de sorte que les matériaux poreux qu'ils comprennent désorbent le fluide réfrigérant. Cette observation s'applique bien entendu de la même façon avec le deuxième et le quatrième module d'adsorption/désorption et le deuxième module d'évaporation et de condensation.

Les différents circuits de chaud et de froid en connexion thermique avec les différents modules de condensation et d'évaporation permettent de transporter le chaud et le froid de l'extérieur vers le dispositif de chauffage/refroidissement par adsorption/désorption en cascade ou l'inverse, à transporter le froid et/ou le chaud générés au sein du dispositif vers l'extérieur.

Ces circuits peuvent être de simples tuyaux métalliques transportant un liquide tel que de l'eau. Ces circuits peuvent aussi être des circuits de transport de chaleur plus complexes utilisant des fluides caloporteurs tels que des sels.

Les différents circuits de chaud et de froid peuvent être tous désolidarisés les uns des autres ou couplés entre eux.

Le dispositif selon l'invention peut être de façon avantageuse caractérisé en ce que le second circuit de chaud est relié thermiquement au premier circuit de désorption de manière à ce que la température de sortie du second circuit de chaud ($T_{cond2}$) permette au premier MOF1 d'atteindre une température supérieure ou égale à $T_{des1}$ à partir de laquelle le MOF1 désorbe le fluide réfrigérant F1.

Un tel dispositif permet de réduire l'encombrement global du dispositif. De plus, la chaleur générée lors de la condensation du second fluide réfrigérant est utilisée pour faire désorber le premier matériau poreux. Le dispositif est rendu plus efficace énergétiquement puisqu'il n'est plus nécessaire d'utiliser une source externe de chaleur pour faire désorber le premier matériau poreux.

Le dispositif selon l'invention peut en outre être caractérisé en ce que le second module d'adsorption/désorption est relié thermiquement à une source de chaud externe de sorte que la température de désorption du MOF2 ($T_{des2}$) est fournie par ladite source de chaud externe choisie parmi les panneaux solaires, les chaleurs perdues, les brûleurs atmosphériques tels que les chaudières à gaz naturel, la géothermie, les chaleurs fatales, les réseaux de chaleur.

Un tel dispositif présente l'avantage d'utiliser des sources externes de chaleur issues d'énergies propres. Les températures de fonctionnement sont aisément atteignables et ne nécessitent pas par exemple de rehausseur de température énergivore.

Les températures de fonctionnement du dispositif sont définies par les différentes températures mises en jeu dans le dispositif, c'est-à-dire les températures des circuits de chaud, de froid, de désorption, d'adsorption. Ce sont les températures auxquelles les matériaux poreux sont soumis, les températures auxquelles les fluides réfrigérants condensent ou s'évaporent.

Ces températures peuvent être définies par la température ambiante. Comme il a déjà été question plus haut, le dispositif fonctionne avantageusement à température ambiante. La température ambiante peut être comprise entre 10 et 70 °C en fonction de la zone géographique où le dispositif est mis en œuvre. La température ambiante est de préférence comprise entre 20 et 50 °C, de préférence la température ambiante est comprise entre 25 et 35 °C, encore de préférence la température ambiante est 30 °C.

Le dispositif selon l'invention peut mettre en œuvre les températures de fonctionnement suivantes :

- la température de sortie du premier circuit de froid ($T_{ev1}$) est comprise entre 5°C et la température ambiante,
- la température de sortie du second circuit de froid ($T_{ev2}$) est comprise entre 5°C et la température ambiante,
- la température de sortie du premier circuit de chaud ($T_{cond1}$) est comprise entre la température ambiante et 70 °C,
- la température de sortie du second circuit de chaud ($T_{cond2}$) est comprise entre la température ambiante et 95 °C, de préférence entre 55 °C et 70 °C .

De telles températures de fonctionnement sont très satisfaisantes en termes de froid et/ou de chaud généré. De telles températures de fonctionnement permettent en outre de mettre en œuvre le dispositif selon l'invention aussi bien dans des zones géographiques tempérées par exemple en Europe centrale, mais aussi dans des zones géographiques plus chaude comme par exemple en Afrique du Nord, en Afrique centrale ou en zones humides par exemple en Asie.

Le dispositif selon l'invention peut en outre mettre en œuvre les températures de fonctionnement suivantes :

- la température d'adsorption des MOF1 et MOF2 ($T_{ads}$) est identique et est comprise entre 10 et 70 °C, de préférence entre 20 à 60 °C,
- la température de désorption du MOF1 ($T_{des1}$) est comprise entre 50 et 95 °C, de préférence entre 55 à 70 °C,
- la température de désorption du MOF2 ($T_{des2}$) est comprise entre 55 et 115 °C, de préférence entre 70 °C et 125 °C.

Les températures de désorption sont relativement faibles permettant de coupler le dispositif de la présente invention avec par exemple des sources de chaleur externes issues d'énergie propre. De plus, la différence entre les températures de désorption du premier et du deuxième matériau poreux permet d'optimiser l'efficacité énergétique du dispositif ainsi mis en cascade.

### Le procédé

La présente invention a pour objet selon un deuxième aspect un procédé pouvant mettre en œuvre le dispositif précédemment discuté. Le procédé selon l'invention met en œuvre au moins une étape de refroidissement par adsorption, et une étape de chauffage par désorption. Ces étapes sont opérées successivement afin de générer du froid et du chaud au niveau notamment des modules d'évaporation et modules de condensation. Les étapes de chauffage et de refroidissement sont décrites ci-après.

### *Etape de refroidissement par adsorption*

L'étape de refroidissement par adsorption peut être caractérisée en ce que les MOF1 et MOF2 adsorbent en même temps. Les modules d'évaporation (10) et (20) sont alors en connexion fluide avec leurs modules d'adsorption/désorption respectifs (500) et (600). L'évaporation du fluide réfrigérant au sein du module d'évaporation étant un processus thermodynamique endothermique, du froid est généré au niveau des modules d'évaporation (10) et (20) pendant l'étape de refroidissement par adsorption.

Au cours de cette étape, un premier module d'adsorption/désorption (500) mettant en œuvre un premier matériau poreux MOF1 est en connexion fluide avec un premier module d'évaporation (10) comprenant un premier fluide réfrigérant F1 en connexion thermique avec un premier circuit de froid (11), ledit MOF1 étant en connexion thermique avec un premier circuit d'adsorption (512) à la température $T_{ads1}$ et étant apte à adsorber ledit fluide réfrigérant F1 à une température d'adsorption $T_{ads}$ comprise entre 10 et 70 °C, de préférence entre 20 à 60 °C .

Le premier circuit d'adsorption (512) est opéré de sorte que la température du circuit d'adsorption $T_{ads1}$ soit supérieure ou égale à la température d'adsorption $T_{ads}$.

De la même façon, un deuxième module d'adsorption/désorption (600) mettant en œuvre un deuxième matériau poreux MOF2 est en connexion fluide avec un deuxième module d'évaporation (20) comprenant un deuxième fluide réfrigérant F2 en connexion thermique avec un deuxième circuit de froid (21), ledit MOF2 étant en connexion thermique avec un deuxième circuit d'adsorption (612) à la température $T_{ads2}$ et étant apte à adsorber ledit fluide réfrigérant F2 à une température d'adsorption $T_{ads}$ comprise entre 10 et 70 °C, de préférence entre 20 à 60 °C.

Le deuxième circuit d'adsorption (612) est opéré de sorte que la température du circuit d'adsorption $T_{ads2}$ soit supérieure ou égale à la température d'adsorption $T_{ads}$.

Par exemple, le ou les circuits d'adsorption sont en connexion thermique avec une source de chaleur extérieure à la température $T_{ads1}$ ou $T_{ads2}$, par exemple le ou les circuits d'adsorption sont en partie à l'air libre et à température ambiante et en partie en connexion thermique avec leurs MOFs respectifs MOF1 ou MOF2. Le ou les circuits d'adsorption peuvent aussi être en partie en connexion thermique par exemple avec deux bains marie dont les températures sont fixées à $T_{ads1}$ et $T_{ads2}$.

Le ou les circuits d'adsorption relient ainsi le premier et le deuxième matériau poreux MOF1 et MOF2 à des sources externes de faibles chaleurs, de préférence les sources de chaleurs sont à température ambiante et le ou les circuits d'adsorption sont en partie à l'air libre.

Au cours de l'étape de refroidissement par adsorption, le premier module d'évaporation (10) est opéré à pression réduite de manière à ce que le fluide F1 atteigne une valeur de pression de vapeur partielle d'adsorption $P_{ev1}$ à laquelle la masse de fluide réfrigérant F1 adsorbée par le MOF1 représente au moins 20%, de préférence au moins 25% et encore de préférence au moins 30%, de la masse du MOF1 séché, de sorte que la température de sortie du premier circuit de froid $T_{ev1}$ soit comprise entre 5 °C et la température ambiante.

La pression réduite $P_{ev1}$ à laquelle le premier fluide réfrigérant F1 est soumis dans le premier module d'évaporation peut être comprise entre 70 à 7400 Pa.

A la température d'adsorption $T_{ads}$, le premier fluide réfrigérant présente une pression saturante $P_{sat/ads}$ donnée tel qu'il est possible d'exprimer la pression du fluide réfrigérant en un rapport correspondant à la valeur de pression de vapeur partielle $P_{ev1}/P_{sat/ads}$.

De préférence, la pression $P_{ev1}$ est choisie de sorte que la valeur de pression de vapeur partielle correspond à un point d'inflexion de l'isotherme du premier matériau poreux considéré à la température d'adsorption $T_{ads}$. Encore de préférence, la pression $P_{ev1}$ est choisie de sorte que la valeur de pression de vapeur partielle correspond au moins à la valeur $P1_{80\%}$, et de préférence $P1_{90\%}$. Pour une valeur de pression de vapeur partielle égale à $P1_{80\%}$ le matériau poreux est apte à adsorber une quantité de fluide réfrigérant égale à 80% de la quantité maximale de fluide réfrigérant adsorbée que leditmatériau poreux peut adsorber et pour une valeur de pression de vapeur partielle égale à $P_{90\%}$ le matériau poreux est apte à adsorber une quantité de fluide réfrigérant égale à 90% de la quantité maximale de fluide réfrigérant adsorbée que leditmatériau poreux peut adsorber.

Dans le cas où la pression $P_{ev1}$ du premier module d'évaporation est choisie de sorte que la valeur de pression de vapeur partielle soit égale à $P1_{80\%}$ et de préférence $P1_{90\%}$, la durée nécessaire pour que le matériau poreux adsorbe une quantité de fluide réfrigérant jusqu'à un ratio massique d'au moins 20%, de préférence 25% et de préférence 30%, par rapport à la masse séchée du matériau poreux est fortement raccourci. Ladite durée peut par exemple être comprise entre au moins 5 min et au moins 1000 min, de préférence entre 10 min et 720 min.

De la même façon le deuxième module d'évaporation (20) est opéré à pression réduite de manière à ce que le fluide F2 atteigne une valeur de pression de vapeur partielle d'adsorption $P_{ev2}$ à laquelle la masse de fluide réfrigérant F2 adsorbée par le MOF2 représente au moins 20% de la masse du MOF2 séché, de sorte que la température de sortie du second circuit de froid $T_{ev2}$ soit comprise entre 5 °C et la température ambiante.

La pression réduite $P_{ev2}$ à laquelle le deuxième fluide réfrigérant F2 est soumis dans le second module d'évaporation peut être comprise entre 70 à 7400 Pa.

A la température d'adsorption $T_{ads}$, le deuxième fluide réfrigérant présente une pression saturante $P_{sat/ads}$ donnée tel qu'il est possible d'exprimer la pression du deuxième fluide réfrigérant en un rapport correspondant à la valeur de pression de vapeur partielle $P_{ev2}/P_{sat/ads}$.

De préférence, la pression $P_{ev2}$ est choisie de sorte que la valeur de pression de vapeur partielle correspond à un point d'inflexion de l'isotherme du deuxième matériau poreux considéré à la température d'adsorption $T_{ads}$. Encore de préférence, la pression $P_{ev1}$ est choisie de sorte que la valeur de pression de vapeur partielle correspond au moins à a valeur $P2_{80\%}$, et de préférence $P2_{95\%}$. Pour une valeur de pression de vapeur partielle égale à $P2_{80\%}$ le matériau poreux est apte à adsorber une quantité de fluide réfrigérant égale à 80% de la quantité maximale de fluide réfrigérant que ledit matériau poreux peut adsorber et pour une valeur de pression de vapeur partielle égale à $P2_{90\%}$ le matériau poreux est apte à adsorber une quantité de fluide réfrigérant égale à 90% en masse séchée de la quantité maximale de fluide réfrigérant que ledit matériau poreux peut adsorber.

Dans le cas où la pression $P_{ev1}$ du premier module d'évaporation est choisie de sorte que la valeur de pression de vapeur partielle soit égale à $P2_{80\%}$ et de préférence $P2_{90\%}$, la durée nécessaire pour que le matériau poreux adsorbe une quantité de fluide réfrigérant jusqu'à un ratio massique d'au moins 20%, de préférence au moins 25%, de préférence au moins 30%, par rapport à la masse séchée du matériau poreux est fortement raccourci. Ladite durée peut par exemple être comprise entre au moins 5 min et au moins 1000 min, de préférence entre 10 min et 720 min.

*Etape de chauffage par désorption*

L'étape de chauffage par désorption peut être caractérisée en ce que les MOF1 et MOF2 désorbent en même temps. Les modules de condensation (30) et (40) sont alors en connexion fluide avec leurs modules d'adsorption/désorption respectifs (500) et (600). La condensation du fluide réfrigérant au sein du module de condensation étant un processus thermodynamique exothermique, du chaud est généré au niveau du module de condensation pendant le mode adsorption.

De préférence, la chaleur générée au niveau du deuxième module de condensation est utilisée de sorte que le premier matériau poreux désorbe.

Le second module d'adsorption/désorption (600) mettant en œuvre le second matériau métallo-organique hybride poreux MOF2 est en connexion fluide avec un deuxième module de condensation (40) comprenant le second fluide réfrigérant F2 en connexion thermique avec un second circuit de chaud (41), ledit MOF2 étant en connexion thermique avec un second circuit de désorption (613) et étant apte à désorber ledit fluide réfrigérant F2 à une température de désorption $T_{des2}$ comprise entre 55 °C et 125 °C, de préférence entre 70 °C et 115 °C.

Le second circuit de désorption (613) est opéré à une température supérieure ou égale à la température de désorption $T_{des2}$ de manière à ce que le MOF2 atteigne une température supérieure ou égale à $T_{des2}$ et désorbe le fluide F2.

Le second module de condensation (40) est opéré à pression réduite de manière à ce que le fluide F2 atteigne une valeur de pression de vapeur partielle de l'adsorption $P_{cond2}$ à laquelle la masse de fluide réfrigérant F2 désorbée par le second MOF2 représente au moins 20%, de préférence au moins 25% et de préférence au moins 30%, de la masse du matériau MOF2 séché, de sorte que la température de sortie du second circuit de chaud $T_{cond2}$ est comprise entre la température ambiante et 95 °C, de préférence entre 55 °C et 70 °C.

L'étape de chauffage par désorption peut être caractérisée en ce que le second circuit de chaud (41) est relié thermiquement au premier circuit de désorption (513) de manière à ce que la température de sortie du second circuit de chaud (41) $T_{cond2}$ soit supérieure ou égale à $T_{des1}$ et permette au premier MOF1 d'atteindre une température supérieure ou égale à $T_{des1}$ et de désorber le fluide F1.

En effet, le premier module d'adsorption/désorption (500) mettant en œuvre le premier matériau métallo-organique hybride poreux MOF1 est en connexion fluide avec un premier module de condensation (30) comprenant le premier fluide réfrigérant F1 en connexion thermique avec un premier circuit de chaud (31), ledit MOF1 étant en connexion thermique avec un premier circuit de désorption et étant apte à désorber ledit fluide réfrigérant F1 à une température de désorption $T_{des1}$ comprise entre 50 et 95 °C, de préférence entre 55 à 70 °C, le premier circuit de désorption (513) est opéré à une température $T_{des} \geq T_{des1}$ de manière à ce que le MOF1 atteigne une température supérieure ou égale à $T_{des1}$ et désorbe le fluide F1,

Le premier module de condensation (30) est opéré à pression réduite de manière à ce que le fluide F1 atteigne une valeur de pression de vapeur partielle de l'adsorption $P_{cond1}$ à laquelle la masse de fluide réfrigérant F1 désorbée par le premier MOF1 représente au moins 20% de la masse du matériau MOF1 séché, de sorte que la température de sortie du premier circuit de chaud (31) $T_{cond1}$ est comprise entre la température ambiante et 70 °C ;

Tout comme lors de l'étape de refroidissement par adsorption, lors du chauffage par désorption, le fluide réfrigérant F1 est soumis à une pression de condensation $P_{cond1}$ et le fluide réfrigérant F2 est soumis à une pression $P_{cond2}$.

A la température de désorption $T_{des1}$ le fluide réfrigérant F1 présente une pression saturante $P_{sat/des1}$ et à la température de désorption $T_{des2}$ le fluide réfrigérant F2 présente une pression saturante $P_{sat/des2}$. Les pressions peuvent ainsi être exprimées en valeur de pression de vapeur saturante, c'est-à-dire le rapport/ration $P_{cond1}/P_{sat/des1}$ et $P_{cond2}/P_{sat/des2}$.

Comme lors de l'étape de refroidissement par adsorption, les valeurs de pression de vapeur partielle des fluides réfrigérant F1 et F2 sont de préférence choisies lors de l'étape de chauffage, de sorte à correspondre à un point d'inflexion des isothermes de désorption des matériaux poreux MOF1 et MOF2 considérés aux températures de désorption $T_{des1}$ et $T_{des2}$. Encore de préférence, la pression $P_{cond1}$ est choisie de sorte que la valeur de pression de vapeur partielle correspond au plus à la valeur $P1_{20\%}$, et de préférence $P1_{5\%}$. Pour une valeur de pression de vapeur partielle égale à $P1_{20\%}$ le matériau poreux est apte à adsorber une quantité de fluide réfrigérant égale à seulement 20% de la quantité maximale de fluide réfrigérant que ledit matériau poreux peut adsorber et pour une valeur de pression de vapeur partielle égale à $P_{5\%}$ le matériau poreux est apte à adsorber une quantité de fluide réfrigérant égale à seulement 5% de la quantité maximale de fluide réfrigérant que ledit matériau poreux peut adsorber.

De façon habituelle, les valeurs de pression de vapeur partielle lors l'étape de refroidissement par adsorption et lors de l'étape de chauffage par désorption sont proches. En effet, les MOF préférés sont des MOFs dont l'isotherme d'adsorption présente une courbe en forme de S (isothermes II, IV ou V IUPAC), c'est-à-dire une courbe présentant un premier palier pour lequel le matériau poreux peut adsorber une faible quantité de fluide réfrigérant puis un palier pour lequel le matériau poreux adsorbe une grande quantité de fluide réfrigérant. Les deux paliers sont de préférence relativement proches, de sorte qu'en modifiant un peu la pression par exemple entre le mode adsorption et le mode désorption, le matériau poreux soit apte à adsorber, soit une grande, soit une faible quantité de fluide réfrigérant.

Lors de l'étape de chauffage par désorption, il est peut être avantageux de se placer au palier pour lequel le matériau poreux peut adsorber une faible quantité de fluide réfrigérant de sorte que le matériau poreux ayant préalablement adsorbée une quantité de fluide réfrigérant d'au moins 20%, de préférence au moins 25% et encore de préférence au moins 30% par rapport à la masse séchée dudit matériau poreux, désorbe rapidement cette même quantité de fluide réfrigérant, c'est-à-dire le matériau poreux désorbe jusqu'à relâcher sous forme de vapeur au moins 20%, de préférence au moins 25% et encore de préférence au moins 30% de sa masse séchée de fluide réfrigérant.

Dans le cas où la pression $P_{cond1}$ à laquelle le premier module de condensation est choisie de sorte que la valeur de pression de vapeur partielle soit égale à $P1_{20\%}$ et de préférence $P1_{5\%}$, la durée nécessaire pour que le matériau poreux désorbe une quantité de fluide réfrigérant jusqu'à un ratio massique d'au moins 20%, de préférence au moins 25%, et encore de préférence au moins 30%, par rapport à la masse séchée du matériau poreux est fortement raccourci. Ladite durée peut par exemple être comprise entre au moins 5 min et au moins 1000 min, de préférence entre 10 min et 720 min.

## Brève description des dessins

D'autres caractéristiques, détails et avantages de l'invention apparaîtront à la lecture de la description détaillée ci-après, et des dessins annexés.

**Fig. 1**
[Fig. 1] montre un schéma d'isothermes d'adsorption I, II, III, IV, V et VI selon la classification IUAC
**Fig. 2**
[Fig. 2] montre un schéma illustrant un mode de réalisation préféré de la présente invention
**Fig. 3**
[Fig. 3] montre deux mises en forme différentes de MOF. La mise en forme a de la figure 3 est une photo d'un MOF sous la forme d'un revêtement d'une plaque de support conducteur. La mise en forme b de la figure 3 est la photo d'un MOF en forme de granulés compactés. Une échelle de longueur est ajoutée à la photo pour une meilleure compréhension.
**Fig. 4**
[Fig. 4] montre un graphique de l'évolution de l'efficacité énergétique SCP et de la quantité de fluide réfrigérant adsorbé en fonction du temps d'un dispositif selon un mode de réalisation de la présente invention.
**Fig. 5**

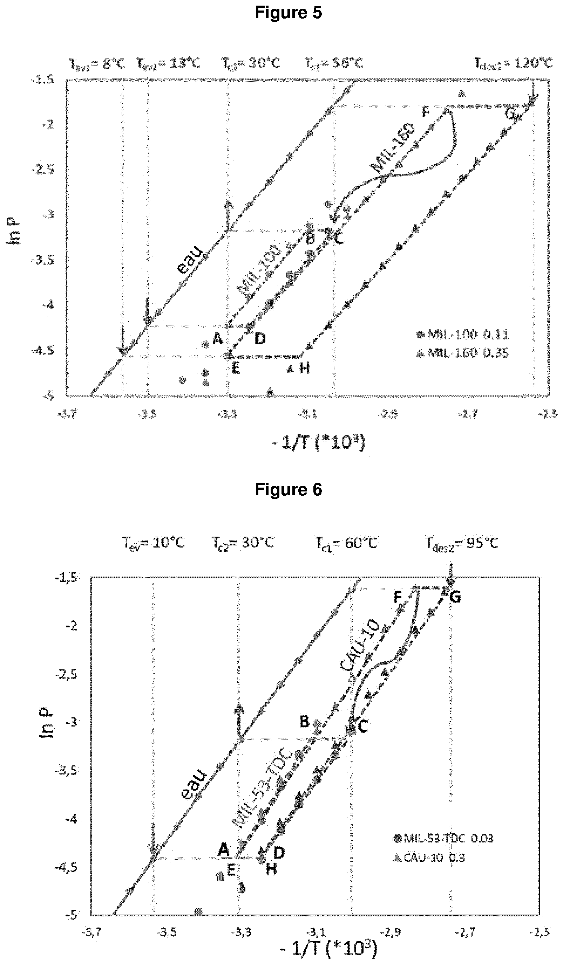

[Fig. 5] montre les deux cycles thermodynamiques de deux matériaux poreux des deux modules d'adsorption/désorption selon un exemple de réalisation de la présente invention
**Fig. 6**
[Fig. 6] montre les deux cycles thermodynamiques de deux matériaux poreux des deux modules d'adsorption/désorption selon un autre exemple de réalisation de la présente invention
**Fig. 7**

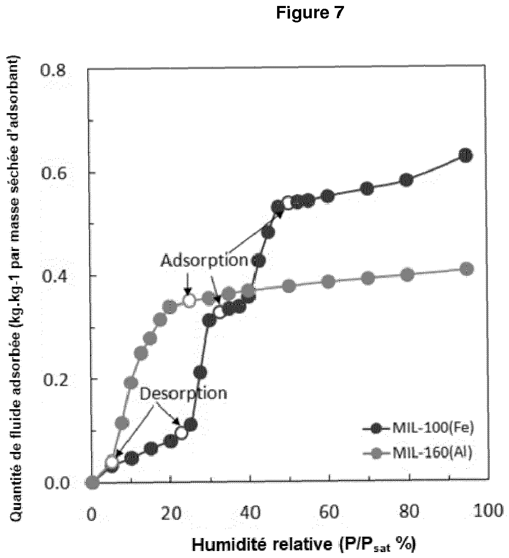

[Fig. 7] montre deux isothermes mesurées à 25°C d'un MOF1 MIL-100(Fe) et d'un MOF2 MIL-160(Al).

## Mode de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Il est maintenant fait référence à la figure 2. La figure 2 montre un schéma d'un dispositif de refroidissement/chauffage par adsorption/désorption en cascade **1** (dénommé ci-après « le dispositif **1** ») selon un mode de réalisation préféré de la présente invention.

### *Premier module d'adsorption/désorption 500*

Le dispositif **1** comprend un premier module d'adsorption/désorption **500** mettant en œuvre un premier fluide réfrigérant **F1** tel que l'eau et un premier matériau poreux MOF1.

Le matériau poreux MOF1 est apte à adsorber un premier fluide réfrigérant **F1** à une première température d'adsorption $T_{ads1}$ et apte à désorber le fluide réfrigérant **F1** à une première température de désorption $T_{desi1}$.

Le matériau poreux MOF1 est relié thermiquement à un premier circuit d'adsorption **512** et un premier circuit de désorption **513**. Les circuits d'adsorption est de désorption contiennent chacun un fluide caloporteur, par exemple de l'eau. Les premiers circuits d'adsorption **512** et de désorption **513** peuvent être allumés ou éteints, c'est-à-dire que le fluide caloporteur qu'ils contiennent est mis ou non en mouvement à l'intérieur desdits circuits.

La température du fluide caloporteur contenu dans le premier circuit d'adsorption **512** est $T_{ads1}$. La température du fluide caloporteur contenu dans le premier circuit de désorption **513** est $T_{des1}$.

Le premier module d'adsorption/désorption **500** est en connexion fluide avec un premier module d'évaporation **10** apte à contenir le fluide réfrigérant **F1** à l'état liquide et/ou gazeux.

Le fluide réfrigérant **F1** dans le premier module d'évaporation **10** est en connexion thermique avec un premier circuit de froid **11**. Le premier circuit de froid **11** comprend un fluide caloporteur circulant ou non suivant que le premier circuit de froid **11** est allumé ou non. La température du fluide caloporteur contenu dans le premier circuit de froid **11** en sortie du module d'évaporation **10** est $T_{ev1}$. Cette première température d'évaporation $T_{ev1}$ permet de générer du froid.

Dans un mode de réalisation particulier de la présente invention, le premier circuit de froid **11** est couplé avec un dispositif de climatisation à ventilo-convecteur **2000**. Un tel dispositif **2000** permet de refroidir par un exemple un ensemble de bureaux d'un immeuble l'été.

Le premier module d'adsorption/désorption **500** est en outre en connexion fluide avec un premier module de condensation **30** apte à contenir le fluide réfrigérant **F1** à l'état liquide et/ou gazeux.

Le fluide réfrigérant **F1** dans le premier module de condensation **30** est en connexion thermique avec un premier circuit de chaud **31**. Le premier circuit de chaud **31** comprend un fluide caloporteur circulant ou non suivant que le premier circuit de chaud **31** est allumé ou non. La température du fluide caloporteur contenu dans le premier circuit de chaud **31** en sortie du module de condensation **30** est $T_{cond1}$. Cette première température de condensation $T_{cond1}$ permet de générer du chaud.

Dans un mode de réalisation particulier de la présente invention (non représenté dans le présent exposé), le premier circuit de chaud **31** est couplé avec un dispositif de climatisation à ventilo-convecteur. Un tel dispositif permet de chauffer par un exemple un ensemble de bureaux d'un immeuble l'hiver.

### *Deuxième module d'adsorption/désorption 600*

Le dispositif 1 comprend un deuxième module d'adsorption/désorption **600** mettant en œuvre un deuxième fluide réfrigérant **F2** et un deuxième matériau poreux MOF2.

Le matériau poreux MOF2 est apte à adsorber le deuxième fluide réfrigérant **F2** à une deuxième température d'adsorption $T_{ads2}$ et apte à désorber le fluide réfrigérant **F2** à une deuxième température de désorption $T_{des2}$.

Le matériau poreux MOF2 est relié thermiquement à un deuxième circuit d'adsorption **612** et un deuxième circuit de désorption **613**. Les circuits d'adsorption et de désorption contiennent chacun un fluide caloporteur, par exemple de l'eau. Les deuxièmes circuits d'adsorption **512** et de désorption **513** peuvent être allumés ou éteints, c'est-à-dire que le fluide caloporteur qu'ils contiennent est mis ou non en mouvement à l'intérieur desdits circuits.

La température du fluide caloporteur contenu dans le deuxième circuit d'adsorption **612** est $T_{ads2}$. La température du fluide caloporteur contenu dans le deuxième circuit de désorption **613** est $T_{des2}$.

Le deuxième module d'adsorption/désorption **600** est en connexion fluide avec un deuxième module d'évaporation **20** apte à contenir le fluide réfrigérant **F2** à l'état liquide et/ou gazeux.

Le fluide réfrigérant **F2** dans le deuxième module d'évaporation **20** est en connexion thermique avec un deuxième circuit de froid **21**. Le deuxième circuit de froid **21** comprend un fluide caloporteur circulant ou non suivant que le deuxième circuit de froid **21** est allumé ou non. La température du fluide caloporteur contenu dans le deuxième circuit de froid **21** en sortie du module d'évaporation **20** est $T_{ev2}$. Cette deuxième température d'évaporation $T_{ev2}$ permet aussi de générer du froid.

Dans un mode de réalisation particulier de la présente invention, le deuxième circuit de froid **21** est couplé avec un dispositif de climatisation à ventilo-convecteur **2000**. Un tel dispositif **2000** permet de refroidir par un exemple un ensemble de bureaux d'un immeuble l'été. Ainsi, selon un mode de réalisation particulier de la présente invention, le dispositif **1** présente deux températures de froid $T_{ev1}$ et $T_{ev2}$ qu'il est par exemple possible de mettre en œuvre indépendamment l'une de l'autre ou bien en combinaison.

Le deuxième module d'adsorption/désorption **600** est en outre en connexion fluide avec un deuxième module de condensation **40** apte à contenir le fluide réfrigérant **F2** à l'état liquide et/ou gazeux.

Le fluide réfrigérant **F2** dans le deuxième module de condensation **40** est en connexion thermique avec un deuxième circuit de chaud **41**. Le deuxième circuit de chaud **41** comprend un fluide caloporteur circulant ou non suivant que le premier circuit de chaud **41** est allumé ou non. La température du fluide caloporteur contenu dans le deuxième circuit de chaud **41** en sortie du module de condensation **40** est $T_{cond2}$. Cette deuxième température de condensation $T_{cond2}$ permet de générer du chaud.

*Mise en cascade*

Dans le mode de réalisation particulier illustré à la figure 2, le deuxième circuit de chaud **41** est relié au premier circuit de désorption **513** en connexion thermique avec le premier matériau poreux MOF1.

Ainsi, la chaleur générée dans le second module de condensation **40** est utilisé pour la désorption du premier matériau poreux MOF1.

La chaleur du fluide caloporteur contenu dans le deuxième circuit de désorption **613** en connexion thermique avec le deuxième matériau poreux MOF2 provient d'une énergie propre. Le circuit de désorption 613 est par exemple couplé à un panneau solaire **1000** qui permet de chauffer le fluide caloporteur contenu dans ledit circuit de sorte que cette chaleur soit au moins supérieur à $T_{des1}$ pour pouvoir chauffer le deuxième matériau poreux MOF2 et le faire désorber.

*Mode ADSORPTION - DESORPTION*

Les deux modes distincts de fonctionnement du dispositif 1 vont dorénavant être décrits plus en détail. Il y a le mode d'adsorption qui correspond notamment à la génération de froid et le mode de désorption qui correspond notamment à la génération de chaud.

*Mode ADSORPTION*

Il est toujours fait référence à la figure 2. Soit le dispositif **1** opéré en mode adsorption.

Le premier circuit de froid **11** est allumé de sorte que le fluide caloporteur qu'il contient circule dans ledit circuit. Le module d'évaporation **10** est en connexion fluide avec le module d'adsorption/désorption **500** de sorte que la vapeur générée dans le module d'évaporation puisse être adsorbée par le premier matériau poreux MOF1 compris dans le premier module d'adsorption/désorption **500.**

Le premier module d'évaporation **10** est opéré à pression réduite de sorte que le fluide réfrigérant **F1** à l'intérieur du module d'évaporation **10** atteigne une valeur de pression de vapeur partielle $P_{ev1}$. A pression réduite, le fluide réfrigérant **F1** contenu dans le premier module d'évaporation **10,** en contact avec le premier circuit de froid **11** s'évapore. L'évaporation étant un phénomène physique endothermique, le fluide réfrigérant **F1** en s'évaporant prélève de la chaleur du premier circuit de froid selon les lois classiques de la thermodynamique. La température du premier circuit de froid **11** en sortie du premier module d'évaporation **10** est alors $T_{ev1}$. Du froid est donc généré au niveau du premier module d'évaporation.

Le premier circuit d'adsorption **512** est allumé, la température $T_{ads1}$ du premier circuit d'adsorption **512** est supérieure ou égale à la température $T_{ads}$ de sorte que la température du premier matériau poreux MOF1 est $T_{ads}$. La température d'adsorption $T_{ads}$ et la valeur de pression de vapeur partielle $P_{ev1}$ à laquelle le fluide réfrigérant F1 est soumis sont choisis par l'utilisateur de sorte que le matériau poreux MOF1 adsorbe au moins 20% de masse de fluide réfrigérant par rapport à la masse du matériau poreux MOF1 séché.

Le second circuit de froid **21** est allumé de sorte que le fluide caloporteur qu'il contient circule dans ledit circuit. Le deuxième module d'évaporation **20** est en connexion fluide avec le module d'adsorption/désorption **600** de sorte que la vapeur générée dans le deuxième module d'évaporation puisse être adsorbée par le deuxième matériau poreux MOF2 compris dans le deuxième module d'adsorption/désorption **600.**

Le deuxième module d'évaporation **20** est opéré à pression réduite de sorte que le fluide réfrigérant **F2** à l'intérieur du module d'évaporation **20** atteigne une valeur de pression de vapeur partielle $P_{ev2}$. A pression réduite, le fluide réfrigérant **F2** contenu dans le deuxième module d'évaporation **20,** en contact avec le deuxième circuit de froid **21** s'évapore. L'évaporation étant un phénomène physique endothermique, le fluide réfrigérant **F2** en s'évaporant prélève de la chaleur du deuxième circuit de froid selon les lois classiques de la thermodynamique. La température du deuxième circuit de froid **21** en sortie du deuxième module d'évaporation **20** est alors $T_{ev2}$. Du froid est aussi généré au niveau du deuxième module d'évaporation.

Le deuxième circuit d'adsorption **612** est allumé, la température du deuxième circuit d'adsorption $T_{ads2}$ est supérieure ou égale à $T_{ads}$ de sorte que la température du deuxième matériau poreux MOF2 est aussi $T_{ads}$. La température d'adsorption $T_{ads}$ et la valeur de pression de vapeur partielle $P_{ev2}$ sont choisis par l'utilisateur de sorte que le matériau poreux MOF2 adsorbe au moins 20% de masse de fluide réfrigérant par rapport à la masse du matériau poreux MOF2 séché.

L'étape d'adsorption peut prendre plusieurs minutes. L'utilisateur peut choisir à quel moment arrêter l'étape d'adsorption. L'utilisateur peut par exemple choisir d'arrêter ladite étape d'adsorption lorsque le matériau poreux a adsorbé suffisamment de fluide réfrigérant, par exemple au moins 20%, de préférence au moins 25%, de préférence au moins 30% en masse de fluide réfrigérant par rapport à la masse du matériau poreux séché.

Arrêter le mode adsorption signifie éteindre les premier et deuxième circuits de froid **21** et **11**. De même, les premier et deuxième circuits d'adsorption sont **513** et **613** sont éteints. Enfin, les connexions fluides entre les modules d'adsorption/désorption **500** et **600** et leurs modules d'évaporation **10** et **20** respectifs sont interrompues.

### Mode DESORPTION

Il est encore fait référence à la figure 2. Soit le dispositif **1** opéré en mode désorption.

Le premier circuit de chaud **11** est allumé de sorte que le fluide caloporteur qu'il contient circule dans ledit circuit. Le module de condensation **30** est en connexion fluide avec le premier module d'adsorption/désorption **500** de sorte que la vapeur relâchée par le premier matériau poreux MOF1 lorsqu'il désorbe puisse être condensée dans le premier module de condensation **30**.

Le premier module de condensation **30** est opéré à pression réduite de sorte que le fluide réfrigérant **F1** à l'intérieur du premier module de condensation **30** atteigne une valeur de pression de vapeur partielle $P_{cond1}$ différente de $P_{ev1}$ et de préférence supérieure à $P_{ev1}$. A pression réduite, le fluide réfrigérant **F1** alors à l'état gazeux contenu dans le premier module de condensation **30**, en contact avec le premier circuit de chaud **31** se condense. La condensation étant un phénomène physique exothermique, le fluide réfrigérant F1 en se condense « donne » de la chaleur au premier circuit de chaud selon les lois classiques de la thermodynamique. La température du premier circuit de chaud **31** en sortie du premier module de condensation **30** est alors $T_{cond1}$. Du chaud est donc généré au niveau du premier module de condensation **30**.

Le premier circuit de désorption **513** est allumé de sorte que la température du premier matériau poreux MOF1 est $T_{des1}$. La température de désorption $T_{des1}$ et la valeur de pression de vapeur partielle $P_{cond1}$ sont choisis par l'utilisateur de sorte que le matériau poreux MOF1 désorbe au moins 20%, de préférence au moins 25% et encore de préférence au moins 30% de masse de fluide réfrigérant par rapport à la masse du matériau poreux MOF1 séché. Ainsi, toute la masse de fluide réfrigérant **F1** adsorbée lors de l'étape d'adsorption est désorbée lors de l'étape de désorption.

La masse de fluide échangée entre le mode adsorption et le mode désorption est choisie supérieure à au moins 20%, de préférence au moins 25% et encore de préférence au moins 30% de la masse de matériau poreux séché. Cette masse de fluide échangée est de façon avantageuse augmenté dans les limites physiques du dispositif. La quantité de fluide ainsi échangée peut être par exemple au moins 30, 40, 50, 60, 70, 80 ou 90% de la masse de matériau poreux séché.

Selon le mode de réalisation particulier de la présente invention illustré en figure 2, le deuxième circuit de chaud **41** est directement couplé au premier circuit de désorption **513**. Ainsi, lorsque le premier circuit de désorption **513** est allumé, le second circuit de chaud est aussi allumé. Et de la même façon, lorsque le deuxième circuit de condensation **41** est allumé, le premier circuit de désorption **513** est aussi allumé.

Le deuxième module de condensation **40** est en connexion fluide avec le deuxième module d'adsorption/désorption **600** de sorte que la vapeur relâchée par le deuxième matériau poreux MOF2 lorsqu'il désorbe puisse être condensée dans le deuxième module de condensation **40**.

Le deuxième module de condensation **40** est opéré à pression réduite de sorte que le fluide réfrigérant **F2** à l'intérieur du deuxième module de condensation **40** atteigne une valeur de pression de vapeur partielle $P_{cond2}$ différente de $P_{ev2}$, de préférence supérieure à $P_{ev2}$. A pression réduite, le fluide réfrigérant **F2**, alors à l'état gazeux, contenu dans le premier module de condensation **40** en contact avec le deuxième circuit de chaud **41,** se condense. La condensation étant un phénomène physique exothermique, le fluide réfrigérant **F2**, en se condensant, « donne » de la chaleur au premier circuit de chaud selon les lois classiques de la thermodynamique. La température du deuxième circuit de chaud **41** en sortie du deuxième module de condensation **40** est alors $T_{cond2}$. Du chaud est donc généré au niveau du deuxième module de condensation **40**.

Le deuxième circuit de désorption **613** est allumé de sorte que la température du deuxième matériau poreux MOF2 est $T_{des2}$. La valeur de la température de désorption est obtenue grâce à une source externe de chaleur. Dans le cas du mode de réalisation particulier illustré à la figure 2, la source de chaleur externe est par exemple un panneau solaire **1000** qui chauffe le deuxième circuit de désorption **613**. La température de désorption $T_{des2}$ et la valeur de pression de vapeur partielle $P_{cond2}$ sont choisies par l'utilisateur de sorte que le matériau poreux MOF2 désorbe au moins 20%, de préférence au moins 25% et encore de préférence au moins 30% de masse de fluide réfrigérant, par rapport à la masse du matériau poreux MOF2 séché. Ainsi, toute la masse de fluide réfrigérant **F2** adsorbée lors de l'étape d'adsorption est désorbée lors de l'étape de désorption.

Il est à noter que même si les températures de condensation $T_{cond1}$ et $T_{ev1}$ sont différentes ainsi que les pressions $P_{ev1}$ et $P_{cond1}$, les valeurs de pression de vapeur partielle auxquelles est soumis le fluide réfrigérant **F1** sont quant à elles relativement proches.

De la même façon, même si les températures de condensation $T_{cond2}$ et $T_{ev2}$ sont différentes ainsi que les pressions $P_{ev2}$ et $P_{cond2}$, les valeurs de pression de vapeur partielle auxquelles est soumis le fluide réfrigérant **F2** sont quant à elles relativement proches.

Arrêter le mode désorption signifie éteindre les premier et deuxième circuits de chaud **31** et **41**. De même, les premier et deuxième circuits de désorption **613** et **513** sont éteints. Enfin, les connexions fluides entre les modules d'adsorption/désorption **500** et **600** et leurs modules de condensation **30** et **40** respectifs sont interrompues.

Le dispositif **1** peut en outre présenter une première connexion fluide (non illustrée dans les figures) de sorte que le premier module de condensation **30** et le premier module d'évaporation **10** soient en connexion fluide. Ainsi, le fluide réfrigérant **F1,** une fois condensé dans le premier module de condensation **30** et revenu à l'état liquide, est réintroduit dans le premier module d'évaporation **10** où il pourra à nouveau s'évaporer.

De la même façon, le dispositif **1** peut en outre présenter une deuxième connexion fluide (non illustrée dans les figures) de sorte que le deuxième module de condensation **40** et le deuxième module d'évaporation **20** soient en connexion fluide. Ainsi, le fluide réfrigérant **F2**, une fois condensé dans le deuxième module de condensation **40** et revenu à l'état liquide est réintroduit dans le deuxième module d'évaporation **20** où il pourra à nouveau s'évaporer.

**Succession d'un mode adsorption et d'un mode désorption**

Selon un mode de réalisation particulier, le mode de désorption et d'adsorption se succèdent les uns les autres dans le temps.

La figure 5 montre l'évolution du ratio d'adsorption (trait fin sur la figure 5) ainsi que l'évolution de la puissance spécifique délivrée par le dispositif **1** (trait épais sur la figure 5) pendant une succession d'un seul mode adsorption puis d'un seul mode désorption sur une durée totale de 1000 secondes.

Pendant l'adsorption, le matériau poreux adsorbe le fluide réfrigérant selon les explications du mode adsorption. Le matériau poreux se charge donc en fluide réfrigérant jusqu'à atteindre un certain ratio d'adsorption exprimé en pourcentage de masse de fluide réfrigérant adsorbée par rapport à la masse de matériau poreux séché. Dans le cas de la figure 5, le matériau poreux adsorbe le fluide réfrigérant pendant un temps de 500 secondes environ jusqu'à atteindre un ratio d'adsorption de 80%.

Une fois le ratio d'adsorption de 80% atteint, le mode désorption est enclenché selon les explications du mode de désorption. Le matériau poreux se décharge donc de la quantité de fluide réfrigérant préalablement adsorbé en mode adsorption. Le matériau poreux désorbe pendant une durée de 500 secondes environ jusqu'à ce que quasiment toute la quantité de fluide réfrigérant adsorbée en mode adsorption soit relâchée sous forme de vapeur par le matériau poreux pendant la mode de désorption.

La figure 5 présente en outre, superposée à la courbe du ratio d'adsorption, la courbe correspondant à l'évolution de puissance spécifique délivrée par le dispositif **1** selon le mode d'adsorption ou de désorption.

Pendant l'adsorption, le dispositif **1** prélève de la chaleur à l'extérieur à travers les circuits de froid des modules d'évaporation. Ainsi, le dispositif **1**, en mode adsorption, peut absorber par exemple jusqu'à 1500 W de chaleur.

Pendant la désorption, le dispositif **1** génère de la chaleur à l'extérieur à travers les circuits de chaud des modules de condensation. Ainsi, le dispositif **1**, en mode désorption, peut générer par exemple jusqu'à 2000 W de chaleur.

**Génération de froid/chaud en continu**

Selon un autre mode de réalisation de la présente invention, le dispositif **1** comprend un troisième module d'adsorption/désorption **500'** et un quatrième module d'adsorption/désorption **600'.**

Ces modules permettent au dispositif d'être en mode adsorption et en mode désorption en même temps et ainsi de produire de façon continue du chaud et du froid.

Lorsque le premier module d'adsorption/désorption **500** est en mode adsorption, le troisième module d'adsorption/désorption **500'** est en mode désorption et inversement.

De même, lorsque le deuxième module d'adsorption/désorption **600** est en mode adsorption, le quatrième module d'adsorption/désorption **600'** est en mode désorption et inversement

**Troisième module d'adsorption/désorption 500'**

Le dispositif **1** comprend en outre un troisième module d'adsorption/désorption **500'** mettant en œuvre le premier fluide réfrigérant **F1** et le premier matériau poreux MOF1.

Le matériau poreux MOF1 est apte à adsorber le premier fluide réfrigérant **F1** à la température d'adsorption $T_{ads}$ et apte à désorber le fluide réfrigérant **F1** à la première température de désorption $T_{des1}$.

Le troisième module d'adsorption/désorption **500'** est en connexion fluide avec le premier module d'évaporation **10** apte à contenir le fluide réfrigérant **F1** à l'état liquide et/ou gazeux et le troisième module d'adsorption/désorption **500'** est en outre en connexion fluide avec le premier module de condensation **30** apte à contenir le fluide réfrigérant **F1** à l'état liquide et/ou gazeux.

Ainsi, le module d'évaporation **10** est alternativement en connexion fluide avec le premier ou le troisième module d'adsorption/désorption **500** et **500'** selon qu'ils soient en mode adsorption ou désorption.

De même, le module de condensation **30** est alternativement en connexion fluide avec le premier ou le troisième module d'adsorption/désorption **500** et **500'** selon que ceux-ci sont en mode désorption ou adsorption.

Le troisième module d'adsorption/désorption **500'** est en connexion thermique avec un troisième circuit d'adsorption (non illustré dans les figures) et un troisième circuit de désorption (non illustré dans les figures) selon le même principe expliqué plus haut que le premier module d'adsorption/désorption **500.**

Le troisième circuit d'adsorption peut être dans la continuité du premier circuit d'adsorption **512.** Dans ce cas, le circuit d'adsorption **512** comprend deux parties de circuit indépendantes de sorte qu'une partie puisse être allumée pendant que l'autre partie est éteinte. A tire d'illustration, lorsque le premier module d'adsorption/désorption **500** est en mode adsorption et le troisième module d'adsorption/désorption **500'** est en mode désorption, la partie du circuit d'adsorption **512** en connexion thermique avec le matériau poreux MOF1 compris dans le premier module d'adsorption/désorption **500** est allumée et la partie du circuit d'adsorption **512** en connexion thermique avec le matériau poreux MOF1 compris dans le troisième module d'adsorption/désorption **500'** est éteinte. C'est bien entendu l'inverse lorsque le premier module d'adsorption/désorption **500** est en mode désorption et le troisième module d'adsorption/désorption **500'** est en mode adsorption.

Le troisième circuit d'adsorption peut être aussi complétement indépendant du premier circuit d'adsorption. Le troisième circuit d'adsorption comprend alors un fluide caloporteur à la température $T_{ads1}$ circulant ou non selon que le troisième circuit d'adsorption est allumé ou non.

De la même façon, le troisième circuit de désorption peut être dans la continuité du premier circuit de désorption ou bien complétement indépendant du premier circuit de désorption. Dans ces deux cas, le fluide caloporteur compris du ou des circuits de désorption est à la température $T_{des1}$.

*Quatrième module d'adsorption/désorption 600'*

Le dispositif **1** comprend en outre un quatrième module d'adsorption/désorption **600'** mettant en œuvre le deuxième fluide réfrigérant **F2** et le deuxième matériau poreux MOF2.

Le matériau poreux MOF2 est apte à adsorber le deuxième fluide réfrigérant **F2** à la deuxième température d'adsorption $T_{ads}$ et apte à désorber le fluide réfrigérant **F2** à la deuxième température de désorption $T_{des2}$.

Le quatrième module d'adsorption/désorption **600'** est en connexion fluide avec le deuxième module d'évaporation **20** apte à contenir le fluide réfrigérant **F2** à l'état liquide et/ou gazeux et le quatrième module d'adsorption/désorption **600'** est en outre en connexion fluide avec le deuxième module de condensation **40** apte à contenir le fluide réfrigérant **F2** à l'état liquide et/ou gazeux.

Ainsi, le module d'évaporation **20** est alternativement en connexion fluide avec le deuxième ou le quatrième module d'adsorption/désorption **600** et **600'** selon que ceux-ci sont en mode adsorption ou désorption.

De même, le module de condensation **40** est alternativement en connexion fluide avec le deuxième ou le quatrième module d'adsorption/désorption **600** et **600'** selon que ceux-ci sont en mode désorption ou adsorption.

Le quatrième module d'adsorption/désorption **600'** est en connexion thermique avec un quatrième circuit d'adsorption (non illustré dans les figures) et un quatrième circuit de désorption (non illustré dans les figures) selon le même principe expliqué plus haut que le deuxième module d'adsorption/désorption **600.**

Le quatrième circuit d'adsorption peut être dans la continuité du deuxième circuit d'adsorption **612.** Dans ce cas, le circuit d'adsorption **612** comprend deux parties de circuit indépendantes de sorte qu'une partie puisse être allumée pendant que l'autre partie est éteinte. A tire d'illustration, lorsque le deuxième module d'adsorption/désorption **600** est en mode adsorption et le quatrième module d'adsorption/désorption **600'** est en mode désorption, la partie du circuit d'adsorption **512** en connexion thermique avec le matériau poreux MOF2 compris dans le deuxième module d'adsorption/désorption **600** est allumée et la partie du circuit d'adsorption **612** en connexion thermique avec le matériau poreux MOF2 compris dans le quatrième module d'adsorption/désorption **600'** est éteinte. C'est bien entendu l'inverse lorsque le deuxième module d'adsorption/désorption **600** est en mode désorption et le quatrième module d'adsorption/désorption **600'** est en mode adsorption.

Le quatrième circuit d'adsorption peut être aussi complétement indépendant du deuxième circuit d'adsorption. Le quatrième circuit d'adsorption comprend alors un fluide caloporteur à la température $T_{ads2}$ circulant ou non selon que le quatrième circuit d'adsorption est allumé ou non.

De la même façon, le quatrième circuit de désorption peut être dans la continuité du deuxième circuit de désorption ou bien complétement indépendant du deuxième circuit de désorption. Dans ces deux cas, le fluide caloporteur compris du ou des circuits de désorption est à la température $T_{des2}$.

**Exemples**

Exemple 1 : MIL-100(Fe)/eau et MIL-160(Al)/eau

Dans le cadre de l'exemple 1, le premier matériau poreux MOF1 est un MOF de type 1,3,5-Benzènetricarboxylate du fer ou plus communément appelé MIL-100(Fe). Le deuxième matériau poreux MOF2 est un MOF de type 2,5-furandicarboxylate de l'aluminium ou plus communément appelé MIL-160(AI).

La figure 7 montre les isothermes pour l'eau des MOF1 et MOF2 du présent exemple. Lesdites isothermes sont considérées à une température de 25 °C.

Le MOF1, en trait sombre sur la figure 7, présente une forme de courbe de type V selon la classification IUPAC. La valeur de pression de vapeur partielle caractéristique $P_{80\%}$ à laquelle le MOF1 a adsorbé 80% de sa capacité maximale d'adsorption de vapeur d'eau dans le présent exemple vaut environ 50%. La capacité maximale d'adsorption du MOF1 se lit à la droite de son isotherme et vaut environ 0,65 kg/kg de MOF1 séché.

Le MOF2, en trait clair sur la figure 7, présente une forme de courbe de type V selon la classification IUPAC. La valeur de pression de vapeur partielle caractéristique $P_{80\%}$ à laquelle le MOF2 a adsorbé 80% de sa capacité maximale d'adsorption de vapeur d'eau dans le présent exemple vaut environ 20 %. La capacité maximale d'adsorption du MOF1 se lit à la droite de son isotherme et vaut environ 0,4 kg/kg de MOF2 séché.

Les MOF1 et MOF2 ont été mis en forme selon le protocole suivant.

Le premier MOF1 est mélangé avec un liant dans un granulateur de type Eirich EL1 par procédé humide. Le liant mis en œuvre est un silicate introduit en proportion massique comprise entre 5 et 25% en fonction de la masse du MOF1 séché.

Le deuxième MOF2 est lui aussi mélangé avec le même liant selon le même procédé décrit plus haut.

A la suite du mélange, des granulés de MOF avec du liant sont obtenus. Les granulés sont de forme sphérique dont la sphéricité peut éventuellement être améliorée en utilisant un sphéroniseur.

Les granulés sous formes de billes sont durcis dans un four au moins à 100°C et de préférence 120 °C pendant au moins 6 heures.

La taille des billes ainsi obtenues est contrôlée selon des procédés connus de l'homme du métier. Le diamètre moyen en nombre des granulés ainsi obtenus est compris entre 0,5 à 0,9 mm.

Le MOF1 ainsi mis sous forme de granulés sphérique est placé entre des lamelles d'un échangeur thermique de type tube/ailettes pour être connecté à un premier circuit de froid et un premier circuit de chaud au sein d'un premier module d'adsorption/désorption.

De la même façon, le MOF2 mis sous forme de granulés sphérique est placé entre des lamelles d'un autre échangeur thermique de type tube/ailettes pour être connecté à un premier circuit de froid et un premier circuit de chaud au sein d'un premier module d'adsorption/désorption.

Les fluides réfrigérant F1 et F2 utilisés pour le dispositif de l'exemple 1 sont l'eau.

Le dispositif de chauffage/refroidissement par adsorption/désorption est le même que celui illustré en figure 2.

Les températures de fonctionnement du dispositif de l'exemple 1 sont données ci-après :

- la température du premier circuit de froid **11** ($T_{ev1}$) est 13°C ;
- la température du second circuit de froid **21** ($T_{ev2}$) est 8°C ;
- la température du premier circuit de chaud **31** ($T_{cond1}$) est 30°C ;
- la température du second circuit de chaud **41** ($T_{cond2}$) est 56 °C ;
- la température d'adsorption du MOF1 et du MOF2 est la même ($T_{ads}$) et vaut 30 °C;
- la température de désorption du MOF1 ($T_{des1}$) est 56°C, elle est obtenu grâce à la température du second circuit de chaud **41**;
- la température de désorption du MOF2 ($T_{des2}$) est 120°C. Elle est par exemple obtenue grâce à des panneaux solaires ou via des circuits de chaleur perdue d'une entreprise.

La figure 5 illustre les deux cycles thermodynamiques des modules d'adsorption/désorption 500 et 600. Les flèches représentent le sens du flux de chaleur généré lors de la désorption du deuxième matériau poreux MOF2.

Le cycle thermodynamique est représenté dans un graphique de la pression en fonction de l'inverse de la température en degrés Kelvin. La droite à la gauche du graphique présente la courbe de changement d'état de l'eau.

Les isostères des matériaux poreux MOF1 et MOF2 sont tracées selon leurs isothermes d'adsorption respectives à différentes températures. Une isostère correspond à une variation de température pour une quantité de fluide réfrigérant adsorbée fixée.

Le segment A-B représente l'isostère du MOF1 (MIL-100(Fe)) lorsque celui-ci a adsorbé un ratio massique de vapeur d'eau égale à 33 % en fonction de la masse séchée du MOF1.

Le segment C-D représente l'isostère du MOF1 lorsque celui-ci a adsorbé un ratio massique de vapeur d'eau égale 11% en fonction de la masse du MOF1 séché.

Le segment E-F représente l'isostère du MOF2 lorsque celui-ci a adsorbé un ratio massique de vapeur d'eau égale 35 % en fonction de la masse du MOF2 séché.

Le segment G-H représente l'isostère du MOF2 lorsque celui-ci a adsorbé un ratio massique de vapeur d'eau égale 11 % en fonction de la masse du MOF2 séché.

Le premier module de condensation **30** est opéré en mode désorption à pression réduite $P_{cond1}$ égale à 16,5kPa.

Le deuxième module de condensation **40** est opéré en mode désorption à pression réduite $P_{cond2}$ égale à 4,2kPa.

*En Mode désorption*

Le MOF2 est en connexion thermique avec un deuxième circuit de désorption **613** couplé à une source de chaleur extérieure à la température $T_{des2}$, avec une variation de 3°C selon les différents dimensionnements de l'échangeur de chaleur.

La température du MOF2 augmente de $T_{ads}$ jusqu'à $T_{des2}$, la pression finale dans le deuxième module d'adsorption/désorption **600** est égale à $P_{cond2}$. Le ratio massique de la masse de vapeur d'eau adsorbée par le MOF2 décroit de 35% à 11%. La chaleur produite par la condensation de l'eau désorbée alimente le premier circuit de désorption **513** en connexion thermique avec le MOF1.

Le MOF1 est en connexion thermique avec un premier circuit de désorption **513** à la température $T_{des1}$, ledit premier circuit de désorption étant couplé avec le deuxième circuit de chaud **41** en direct ou bien à l'aide d'un intermédiaire de stockage.

La température du MOF1 augmente de $T_{ads}$ jusqu'à $T_{des1}$. La pression finale dans le premier module d'adsorption/désorption **500** est égale à $P_{cond2}$. Le ratio massique de masse de vapeur d'eau adsorbée par le MOF1 décroit de 33% à 11%.

*En Mode adsorption*

Le deuxième circuit de froid **21** est en connexion thermique avec le deuxième module d'évaporation **20**. Le deuxième circuit de froid **21** est à la température $T_{ev2}$, avec une variation de 3°C selon les différents dimensionnements de l'échangeur de chaleur.

Le ratio massique de la masse de vapeur d'eau adsorbée par le MOF2 augmente de 11% à 35%.

De la même façon, le premier circuit de froid **11** est en connexion thermique avec un premier module d'évaporation **10**. Le premier circuit de froid **11** est à la température $T_{ev1}$, avec une variation de 3°C selon les différents dimensionnements de l'échangeur de chaleur.

Le ratio massique de la masse de vapeur d'eau adsorbée par le MOF1 augmente de 11% à 33%.

Le temps de chaque opération peut être librement choisi. Sachant que plus la durée de chaque mode est longue et plus la réaction de l'adsorption ou de la désorption sera complète avant l'état de l'équilibre.

Dans le cadre de l'exemple 1, le COP du premier module d'adsorption/désorption **500** est proche de 1 et vaut 0,72. La puissance spécifique de refroidissement du premier module d'évaporation **10** est 580 W/kg de MOF (MIL-100(Fe)).

Le COP du deuxième module d'adsorption/désorption **600** est aussi proche de 1 et vaut 0,8. La puissance spécifique de refroidissement du deuxième module d'évaporation **600** est 850 W/kg de MOF (de MIL-160(Al)).

La présente invention permet avantageusement d'atteindre une diminution de température pouvant aller jusqu'à 20 °C.

Le COP global du dispositif selon l'exemple 1 est égal à 1,54.

L'homme du métier peut modifier le temps de commutation selon les MOFs utilisés, la mise en forme desdits MOFS, le dimensionnement des échangeurs, les profils des isothermes.

Ainsi, le présent exemple 1 démontre l'efficacité d'un mode de réalisation du dispositif et du procédé de la présente invention tant en termes d'efficacité énergétique qu'en termes de température de fonctionnement permettant les avantages discuté plus haut dans le présent exposé.

Exemple 2 : MIL-53(Al)-TDC/eau et CAU-10(Al)/eau

Dans le cadre de l'exemple 2, le premier matériau poreux MOF1 est 2,5-thiophènedicarboxylate de l'aluminium, plus communément appelé MIL-53(Al)-TDC. Le deuxième matériau poreux MOF2 est 1,3-benzènedicarboxylate de l'aluminium, plus communément appelé CAU-10(Al).

La synthèse de tels MOFs est par exemple décrite dans la littérature dans :

- C. B. L. Tschense, et al., New Group 13 MIL-53 Derivates based on 2,5-Thiophenedicarboxylic Acid. Z. Anorg. Allg. Chem. 643(2017)1600-1608, et
- D. Lenzen, et al., Scalable Green Synthesis and Full-Scale Test of the Metal-Organic Framework CAU-10-H for Use in Adsorption-Driven Chillers, Adv. Mater. (2017)1705869.

Le premier MOF1 a été dispersé dans de l'eau désionisée avec une agitation vigoureuse pendant 10 minutes suivie d'un traitement supersonique pendant 20 minutes pour former une suspension homogène.

Une résine de silicone a été ajoutée en tant que liant à la suspension sous agitation continue. Un échangeur de chaleur de type tube/ailette a été nettoyé dans de l'acétone, rincé avec de l'acide acétique dilué et l'eau déionisée, puis revêtu par trempage-tirage dans la suspension, séché à 50°C pendant 1 heure et durci à 180°C pendant 4 heures. Le premier module d'adsorption/désorption **500** est ainsi formé.

Le deuxième module d'adsorption/désorption **600** est réalisé selon le même protocole avec le deuxième matériau poreux MOF2.

Les fluides réfrigérants F1 et F2 mis en œuvre sont l'eau.

Le dispositif mis en œuvre dans l'exemple 2 est le dispositif de la figure 2.

Les températures de fonctionnement du dispositif de l'exemple 2 sont données ci-après :

- la température du premier circuit de froid **11** ($T_{ev1}$) est 10°C ;
- la température du second circuit de froid **21** ($T_{ev2}$) est 10 °C ;
- la température du premier circuit de chaud **31** ($T_{cond1}$) est 30 °C ;
- la température du second circuit de chaud **41** ($T_{cond2}$) est 60 °C ;
- la température d'adsorption des MOF1 et MOF2 ($T_{ads}$) est la même et vaut 30 °C ;
- la température de désorption du MOF1 ($T_{des1}$) est 60 °C ; elle est obtenu grâce à la température du second circuit de chaud **41** ;
- la température de désorption du MOF2 ($T_{des2}$) est 95 °C, elle est par exemple obtenue grâce à des panneaux solaires ou via des circuits de chaleur perdue d'une entreprise.

La figure 6 illustre les deux cycles thermodynamiques des modules d'adsorption/désorption **500** et **600**. Les flèches représentent le sens du flux de chaleur lors de la désorption du deuxième matériau poreux MOF2.

Les isostères des matériaux poreux MOF1 et MOF2 tracées selon leurs isothermes d'adsorption respectives à différentes températures.

Le segment A-B représente l'isostère du MOF1 lorsqu'il a adsorbé un ratio massique de masse de vapeur d'eau égale à 34% en fonction de la masse séché du MOF1

Le segment C-D représente l'isostère du MOF1 lorsqu'il a adsorbé un ratio massique de masse de vapeur d'eau égale à 3% en fonction de la masse séché du MOF1.

Le segment E-F représente l'isostère du MOF2 lorsqu'il a adsorbé un ratio massique de masse de vapeur d'eau égale à 30% en fonction de la masse séché du MOF2.

Le segment G-H représente l'isostère de CAU-10(Al) du MOF2 lorsqu'il a adsorbé un ratio massique de masse de vapeur d'eau égale à 2% en fonction de la masse séché du MOF2.

Le premier module de condensation **30** est opéré en mode désorption à pression réduite $P_{cond1}$ égale à 20 kPa.

Le deuxième module de condensation 40 est opéré en mode désorption à pression réduite $P_{cond2}$ égale à 4,2 kPa.

*En mode désorption*

Le MOF2 est en connexion thermique avec un deuxième circuit de désorption **613** à la température $T_{des2}$, avec une variation de 3°C selon les différents dimensionnements de l'échangeur de chaleur.

La température du MOF2 augmente de $T_{ads}$ jusqu'à $T_{des2}$, la pression finale dans le deuxième module d'adsorption/désorption **600** est égale à $P_{cond2}$. Le ratio massique de la masse de vapeur d'eau adsorbée par le MOF2 décroit de 30% à 2%. La chaleur produite par la condensation de l'eau désorbée alimente le premier circuit de désorption **513** en connexion thermique avec le MOF1.

Le MOF1 est en connexion thermique avec un premier circuit de désorption **513** à la température $T_{des1}$, ledit premier circuit de désorption étant couplé avec le deuxième circuit de chaud **41** en direct ou bien à l'aide d'un intermédiaire de stockage.

La température du MOF1 augmente de $T_{ads}$ jusqu'à $T_{des1}$. La pression finale dans le premier module d'adsorption/désorption **500** est égale à $P_{cond2}$. Le ratio massique de masse de vapeur d'eau adsorbée par le MOF1 décroit de 34% à 3%.

*En mode adsorption*

Le deuxième circuit de froid **21** est en connexion thermique avec le deuxième module d'évaporation **20**. Le deuxième circuit de froid **21** est à la température $T_{ev2}$, avec une variation de 3°C selon les différents dimensionnements de l'échangeur de chaleur.

Le ratio massique de la masse de vapeur d'eau adsorbée par le MOF2 augmente de 2% à 30%.

De la même façon, le premier circuit de froid **11** est en connexion thermique avec un premier module d'évaporation **10**. Le premier circuit de froid **11** est à la température $T_{ev1}$, avec une variation de 3°C selon les différents dimensionnements de l'échangeur de chaleur.

Le ratio massique de la masse de vapeur d'eau adsorbée par le MOF1 augmente de 3% à 34%.

Dans le cadre de l'exemple 2, le COP du deuxième module d'adsorption/désorption **600** est proche de 1 et vaut 0,67. Le COP du deuxième module d'adsorption/désorption **500** est aussi proche de 1 et vaut 0,82.

La présente invention permet avantageusement d'atteindre une diminution de température pouvant aller jusqu'à 20 °C.

Le COP global du dispositif selon l'exemple 2 vaut à 1,49.

L'exemple 2 démontre aussi l'efficacité d'un mode de réalisation du dispositif et du procédé de la présente invention tant en termes d'efficacité énergétique qu'en termes de température de fonctionnement permettant les avantages discuté plus haut dans le présent exposé.

## Revendications

1. Un dispositif de refroidissement/chauffage par adsorption/désorption en cascade comprenant :

   - au moins deux modules d'adsorption/désorption (500, 600) d'un fluide réfrigérant, chaque module mettant en œuvre un fluide réfrigérant (F1, F2) et un matériau métallo-organique hybride poreux (MOF1, MOF2), lesdits MOF1 et MOF2 étant chacun en connexion thermique avec un circuit d'adsorption (512, 612) et avec un circuit de désorption (513, 613) tels que :
   - le premier MOF1 présente une isotherme d'adsorption de type II, IV ou V selon la classification IUPAC **caractérisée par** une valeur de pression de vapeur partielle d'adsorption $P_{80\%}$ (correspondant à la valeur de pression de vapeur partielle à laquelle la quantité de fluide réfrigérant F1 adsorbée par le MOF1 représente 80% de la quantité maximale d'adsorption dudit MOF1) comprise entre 5 et 60 %, de préférence entre 15 et 50 %, ladite isotherme d'adsorption étant obtenue à une température correspondant à la température d'adsorption du circuit d'adsorption (512), et
   - le second MOF2 présente une isotherme d'adsorption de type II, IV ou V selon la classification IUPAC **caractérisée par** une valeur de pression de vapeur partielle d'adsorption $P_{80\%}$ (correspondant à la valeur de pression de vapeur partielle à laquelle la quantité de fluide réfrigérant F2 adsorbée par le MOF2 représente 80% de la quantité maximale d'adsorption dudit MOF2) comprise entre 5 et 40 % de pression relative du fluide réfrigérant, de préférence entre 10 et 30 %, ladite isotherme d'adsorption étant obtenue à une température correspondant à la température d'adsorption du circuit d'adsorption (612).

2. Dispositif selon la revendication 1, où les matériaux métallo-organique hybride poreux sont différents.

3. Dispositif selon les revendications précédentes, où la température d'adsorption ($T_{ads}$) des circuits d'adsorption (512, 612) est comprise entre 10 et 70 °C, et de préférence 20 et 60 °C.

4. Dispositif selon les revendications précédentes, où les fluides réfrigérants sont choisis parmi l'eau, les alcools, l'ammoniac ou leurs mélanges.

5. Dispositif selon l'une quelconque des revendications 1 à 3 précédentes, où les matériaux métallo-organiques hybrides poreux MOF sont de préférence des complexes Métal-Ligand organique M-L' dans lesquels ;

   A) le métal « M » est choisi parmi le fer, l'aluminium, le chrome, le zirconium et le titane
   B) le ligand organique « L' » est un ligand carboxylate de formule R1-(C(=O)-R3)q dans laquelle
   q représente un entier de 2 à 6; de préférence 2, 3 ou 4;
   chaque occurrence de R3 est indépendamment sélectionnée parmi un atome d'halogène, -OH, -OY où Y représente un cation de métal alcalin, -OR4, -OC(=O)R4, ou NR4R4', où R4 et R4', identiques ou différents, représentent des radicaux alkyles en C1-12
   R1 représente indépendamment:

   un radical alkyle en C1 -C12, alcényle en C2 -C12 ou alcynyle en C2 -C12;
   un radical aryle monocyclique ou polycyclique, condensé ou non, comprenant 6 à 50 atomes de carbone;
   un hétéroaryle monocyclique ou polycyclique, condensé ou non, comprenant 3 à 50 atomes de carbone avec un ou plusieurs atomes d'oxygène, d'azote ou/et de soufre;
   R1 portant éventuellement un ou plusieurs substituants choisis indépendamment parmi un atome d'halogè-

ne, -OH, -COOH, -SO$_3$H, -NH$_2$, -NO$_2$, ou alkyle en C1-6, un radical aryle monocyclique ou polycyclique, ou un radical hétéroaryle monocyclique ou polycyclique avec un ou plusieurs atomes d'oxygène, d'azote ou/et de soufre.

**6.** Dispositif selon les revendications précédentes, **caractérisé en ce que** :

- le premier module d'adsorption/désorption (500) comprenant le MOF1 est alternativement en connexion fluide avec un premier module d'évaporation (10) dans lequel le fluide réfrigérant F1 est relié thermiquement avec un premier circuit de froid (11) et un premier module de condensation (30) dans lequel le fluide réfrigérant F1 est relié thermiquement à un premier circuit de chaud (31), et
- un second module d'adsorption/désorption (600) comprenant le MOF2 est alternativement en connexion fluide avec un second module d'évaporation (20) dans lequel le fluide réfrigérant F2 est relié thermiquement avec un second circuit de froid (21) et un second module de condensation (40) dans lequel le fluide réfrigérant F2 est relié thermiquement à un second circuit de chaud (41).

**7.** Dispositif selon les revendications précédentes, où le second circuit de chaud (41) est relié thermiquement au premier circuit de désorption (513) de manière à ce que la température de sortie du second circuit de chaud (41) (T$_{cond2}$) permette au premier MOF1 d'atteindre une température supérieure ou égale à T$_{des1}$ à partir de laquelle le MOF1 désorbe le fluide réfrigérant F1.

**8.** Dispositif selon les revendications précédentes, où le second module d'adsorption/désorption (600) est relié thermiquement à une source de chaud externe (1000) de sorte que la température de désorption du MOF2 (T$_{des2}$) est fournie par ladite source de chaud externe (1000) choisie parmi les panneaux solaires, les chaleurs perdues, les brûleurs atmosphériques tels que les chaudières à gaz naturel, la géothermie, les chaleurs fatales, les réseaux de chaleur.

**9.** Dispositif selon les revendications précédentes, où :

- la température de sortie du premier circuit de froid (11) (T$_{ev1}$) est comprise entre 5°C et la température ambiante,
- la température de sortie du second circuit de froid (21) (T$_{ev2}$) est comprise entre 5°C et la température ambiante,
- la température de sortie du premier circuit de chaud (31) (T$_{cond1}$) est comprise entre la température ambiante et 70 °C ,
- la température de sortie du second circuit de chaud (41) (T$_{cond2}$) est comprise entre la température ambiante et 95 °C, de préférence entre 55 °C et 70 °C .

**10.** Le dispositif selon les revendications précédentes, où :

- la température d'adsorption des MOF1 et MOF2 (T$_{ads}$) est identique et est comprise entre 10 et 70 °C, de préférence entre 20 à 60 °C,
- la température de désorption du MOF1 (T$_{des1}$) est comprise entre 50 et 95 °C, de préférence entre 55 à 70 °C,
- la température de désorption du MOF2 (T$_{des2}$) est comprise entre 55 et 125C, de préférence entre 70 °C et 115 °C.

**11.** Le dispositif selon les revendications précédentes, où le ou les MOF1 ou MOF2 sont sous la forme d'un revêtement d'un support conducteur.

**12.** Le dispositif selon l'une quelconque des revendications précédentes où le premier module d'adsorption/désorption (500) du premier fluide réfrigérant F1 est mis en série avec un troisième module d'adsorption/désorption (500') dudit premier fluide réfrigérant F1, de sorte que lorsque le premier module d'adsorption/désorption (500) est en connexion fluide avec le premier module d'évaporation (10), le troisième module d'adsorption/désorption (500') du fluide réfrigérant F1 est en connexion fluide avec le premier module de condensation (30), et inversement, lorsque le premier module d'adsorption/désorption (500) est en connexion fluide avec le premier module de condensation (30), le troisième module d'adsorption/désorption (500') du fluide réfrigérant F1 est en connexion fluide avec le premier module d'évaporation (10), et le second module d'adsorption/désorption (600) du second fluide réfrigérant F2 est mis en série avec un quatrième module d'adsorption/désorption (600') dudit second fluide réfrigérant F2, de sorte que lorsque le second module d'adsorption/désorption (600) est en connexion fluide avec le second module d'évaporation (20), le quatrième module d'adsorption/désorption (600') du fluide réfrigérant F2 est en connexion fluide avec le second module de condensation (40), et inversement, lorsque le second module d'adsorption/désorption

(600) est en connexion fluide avec le second module de condensation (40), le quatrième module d'adsorption/désorption (600') du fluide réfrigérant F2 est en connexion fluide avec le second module de d'évaporation (20).

13. Dispositif de climatisation à ventilo-convecteur mettant en œuvre un dispositif selon l'une quelconque des revendications précédentes.

14. Dispositif de climatisation à plancher ou plafond rafraîchissant mettant en œuvre un dispositif selon l'une quelconque des revendications précédentes.

15. Utilisation d'un dispositif selon les revendications précédentes pour le refroidissement ou le chauffage dans un dispositif de climatisation à ventilo convecteur, ou à plancher ou plafond rafraîchissant.

16. Procédé de refroidissement/chauffage par adsorption/désorption en cascade mettant en œuvre un dispositif selon l'une quelconque des revendications précédentes, comprenant les étapes suivantes :

a) une étape de refroidissement par adsorption dans laquelle,
un premier module d'adsorption/désorption (500) mettant en œuvre un premier matériau métallo-organique hybride poreux MOF1 est en connexion fluide avec un premier module d'évaporation (10) comprenant un premier fluide réfrigérant F1 en connexion thermique avec un premier circuit de froid (11), ledit MOF1 étant en connexion thermique avec un premier circuit d'adsorption (512) et étant apte à adsorber ledit fluide réfrigérant F1 à une température d'adsorption $T_{ads}$ comprise entre 10 et 70°C, de préférence entre 20 à 60°C ;
un second module d'adsorption/désorption (600) mettant en œuvre un second matériau métallo-organique hybride poreux MOF2 est en connexion fluide avec un second module d'évaporation (20), comprenant un second fluide réfrigérant F2 en connexion thermique avec un second circuit de froid (21), ledit MOF2 étant en connexion thermique avec un second circuit d'adsorption (612) et étant apte à adsorber ledit fluide réfrigérant F2 à une température $T_{ads}$ identique à celle du MOF1 comprise entre 10 et 70°C, de préférence entre 20 à 60°C ;
ladite étape d'adsorption étant **caractérisée en ce que** :

- le premier circuit d'adsorption (512) est opéré à une température $T_{ads1} \geq T_{ads}$ de manière à ce que le MOF1 atteigne une température supérieure ou égale à $T_{ads}$ et adsorbe le fluide F1,
et
- le premier module d'évaporation (10) est opéré à pression réduite de manière à ce que le fluide F1 atteigne une valeur de pression de vapeur partielle d'adsorption $P_{ev1}$ à laquelle la masse de fluide réfrigérant F1 adsorbée par le MOF1 représente au moins 20% de la masse du MOF1 séché,
de sorte que la température de sortie du premier circuit de froid (11) ($T_{ev1}$) est comprise entre 5 °C et la température ambiante; et
- le second circuit d'adsorption (612) est opéré à une température $T_{ads2} \geq T_{ads}$ de manière à ce que le MOF2 atteigne une température supérieure ou égale à $T_{ads}$ et adsorbe le fluide F2,
et
- le second module d'évaporation (20) est opéré à pression réduite de manière à ce que le fluide F2 atteigne une valeur de pression de vapeur partielle d'adsorption $P_{ev2}$ à laquelle la masse de fluide réfrigérant F2 adsorbée par le MOF2 représente au moins 20% de la masse du MOF2 séché,
de sorte que la température de sortie du second circuit de froid (21) ($T_{ev2}$) est comprise entre 5 °C et la température ambiante ; et

b) une étape de chauffage par désorption dans laquelle,
le premier module d'adsorption/désorption (500) mettant en œuvre le premier matériau métallo-organique hybride poreux MOF1 est en connexion fluide avec un premier module de condensation (30) comprenant le premier fluide réfrigérant F1 en connexion thermique avec un premier circuit de chaud (31), ledit MOF1 étant en connexion thermique avec un premier circuit de désorption (513) et étant apte à désorber ledit fluide réfrigérant F1 à une température de désorption $T_{des1}$ comprise entre 50 et 95 °C, de préférence entre 55 à 70 °C,
le second module d'adsorption/désorption (600) mettant en œuvre le second matériau métallo-organique hybride poreux MOF2 est en connexion fluide avec un second module de condensation (40) comprenant le second fluide réfrigérant F2 en connexion thermique avec un second circuit de chaud (41), ledit MOF2 étant en connexion thermique avec un second circuit de désorption (613) et étant apte à désorber ledit fluide réfrigérant F2 à une température de désorption $T_{des2}$ comprise entre 55 et 125 °C, de préférence entre 70 °C et 115 °C,
ladite étape de désorption étant **caractérisée en ce que** :

- le premier circuit de désorption (513) est opéré à une température $T_{des} \geq T_{des1}$ de manière à ce que le MOF1 atteigne une température supérieure ou égale à $T_{des1}$ et désorbe le fluide F1, et

- le premier module de condensation (30) est opéré à pression réduite de manière à ce que le fluide F1 atteigne une valeur de pression de vapeur partielle de l'adsorption $P_{cond1}$ à laquelle la masse de fluide réfrigérant F1 désorbée par le premier MOF1 représente au moins 20% de la masse du matériau MOF1 séché,

de sorte que la température de sortie du premier circuit de chaud 30 ($T_{cond1}$) est comprise entre la température ambiante et 70 °C ;

et

- le second circuit de désorption (613) est opéré à une température $T_{des} \geq T_{des2}$ de manière à ce que le MOF2 atteigne une température supérieure ou égale à $T_{des2}$ et désorbe le fluide F2, et

- le second module de condensation (40) est opéré à pression réduite de manière à ce que le fluide F2 atteigne une valeur de pression de vapeur partielle de l'adsorption $P_{cond2}$ à laquelle la masse de fluide réfrigérant F2 désorbée par le second MOF2 représente au moins 20% de la masse du matériau MOF2 séché,

de sorte que la température de sortie du second circuit de chaud (41) ($T_{cond2}$) est comprise entre la température ambiante et 95 °C, de préférence entre 55 °C et 70 °C ;

et

ladite étape de désorption étant **caractérisée en ce que** le second circuit de chaud (41) est relié thermiquement au premier circuit de désorption (513) de manière à ce que la température de sortie du second circuit de chaud (41) ($T_{cond2}$) - qui est supérieure ou égale à $T_{des1}$ - permette au premier MOF1 d'atteindre une température supérieure ou égale à $T_{des1}$ et de désorber le fluide F1.

## Figure 1

## Figure 2

## Figure 3

## Figure 4

## Figure 5

## Figure 6

**Figure 7**

**Europäisches Patentamt**
**European Patent Office**
**Office européen des brevets**

# RAPPORT DE RECHERCHE EUROPEENNE

Numéro de la demande

EP 19 30 6516

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 2 590 356 A1 (JEUMONT SCHNEIDER [FR]) 22 mai 1987 (1987-05-22) | 1-11, 13-15 | INV. F25B17/08 F25B29/00 |
| A | * page 3, ligne 7 - page 6, ligne 18; figure 2 * | 12,16 | |
| | ----- | | |
| X | WO 2010/047820 A2 (EXXONMOBIL RES & ENG CO [US]; MINHAS BHUPENDER S [US] ET AL.) 29 avril 2010 (2010-04-29) | 1,3,5, 7-11 | |
| A | * alinéas [0036] - [0039], [0041] - [0051]; figure 1 * | 2,4,6, 12-16 | |
| | ----- | | |
| A | US 2014/250927 A1 (YOSHIDA HIROAKI [JP] ET AL) 11 septembre 2014 (2014-09-11) * alinéas [0020] - [0100]; figures 1-8 * | 1-16 | |
| | ----- | | |

**DOMAINES TECHNIQUES RECHERCHES (IPC)**

F25B

Le présent rapport a été établi pour toutes les revendications

| Lieu de la recherche | Date d'achèvement de la recherche | Examinateur |
|---|---|---|
| Munich | 29 janvier 2020 | Amous, Moez |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 19 30 6516

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-01-2020

| Document brevet cité au rapport de recherche | | Date de publication | Membre(s) de la famille de brevet(s) | | Date de publication |
|---|---|---|---|---|---|
| FR 2590356 | A1 | 22-05-1987 | CN | 86107749 A | 10-06-1987 |
| | | | DE | 3638706 A1 | 21-05-1987 |
| | | | DK | 538186 A | 20-05-1987 |
| | | | FR | 2590356 A1 | 22-05-1987 |
| | | | JP | S62175563 A | 01-08-1987 |
| | | | US | 4765395 A | 23-08-1988 |
| WO 2010047820 | A2 | 29-04-2010 | CA | 2740612 A1 | 23-10-2009 |
| | | | CN | 102203523 A | 28-09-2011 |
| | | | EP | 2352957 A2 | 10-08-2011 |
| | | | JP | 2012506987 A | 22-03-2012 |
| | | | SG | 190648 A1 | 28-06-2013 |
| | | | SG | 10201408610X A | 27-02-2015 |
| | | | US | 2010132359 A1 | 03-06-2010 |
| | | | US | 2013025272 A1 | 31-01-2013 |
| | | | WO | 2010047820 A2 | 29-04-2010 |
| US 2014250927 | A1 | 11-09-2014 | CN | 103946648 A | 23-07-2014 |
| | | | JP | 5725201 B2 | 27-05-2015 |
| | | | JP | WO2013076805 A1 | 27-04-2015 |
| | | | US | 2014250927 A1 | 11-09-2014 |
| | | | WO | 2013076805 A1 | 30-05-2013 |

EPO FORM P0460

Pour tout renseignement concernant cette annexe : voir Journal Officiel de l'Office européen des brevets, No.12/82

**EP 3 825 627 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3026163

- FR 2590356

**Littérature non-brevet citée dans la description**

- **N. DOUSS ; F. MEUNIER.** *Experimental study of cascading adsorption cycles,* 30 Juin 1988
- **C. B. L. TSCHENSE et al.** New Group 13 MIL-53 Derivates based on 2,5-Thiophenedicarboxylic. *Acid. Z. Anorg. Allg. Chem.,* 2017, vol. 643, 1600-1608

- **D. LENZEN et al.** Scalable Green Synthesis and Full-Scale Test of the Metal-Organic Framework CAU-10-H for Use in Adsorption-Driven Chillers. *Adv. Mater.,* 2017